# EUROPEAN PATENT APPLICATION

(11) **EP 4 424 928 A1**
(43) Date of publication of application: **04.09.2024**
(21) Application number: 22887147.1
(22) Date of filing: 27.10.2022
(51) Int. Cl.: E02F 9/20, E02F 9/22

(54) **EXCAVATOR**

(30) Priority: 29.10.2021 JP 2021178372
(71) Applicant: Sumitomo Construction Machinery Co., Ltd., Tokyo 141-6025 (JP)
(72) Inventor: NISHIKAWARA, Riichi, Chiba-shi, Chiba 263-0001 (JP)
(74) Representative: Louis Pöhlau Lohrentz
(86) International application number: PCT/JP2022/040244
(87) International publication number: WO 2023/074822

(57) **Abstract**

An excavator (100) includes: a lower traveling body (1); an upper rotating body (3) mounted on the lower traveling body (1); an engine (11) mounted in the upper rotating body (3); a main pump (14) that serves as a hydraulic pump driven by the engine (11); a traveling hydraulic motor (20); a traveling operation device (26D) that operates the traveling hydraulic motor (20); and a controller (30) that controls the amount of discharge from the main pump (14) based on negative control. The controller (30) is structured to change the mode of negative control-based flow rate control according to the details of operations performed on the traveling operation device (26D).

## Description

### Technical Field

The present invention relates to an excavator equipped with a negative control hydraulic system.

### Background Art

Excavators equipped with a negative control hydraulic system have been known heretofore (see, for example, patent document 1). In a negative control hydraulic system like this, hydraulic pumps discharge hydraulic oil, and the portion of the hydraulic oil that does not flow into hydraulic actuators, which allow each part of the excavator to move, is sent to hydraulic oil tanks through apertures formed on center bypass oil lines. The amount of hydraulic oil to be discharged from the hydraulic pumps is controlled according to control pressure, which is the pressure of hydraulic oil upstream of the apertures. The control pressure is also referred to as "negative control pressure," and increases as the flow rate of hydraulic oil that passes through the apertures increases. When a hydraulic actuator is operated, hydraulic oil flows into the hydraulic actuator at an increased flow rate, and the flow rate of hydraulic oil that passes through the apertures decreases in turn, causing a drop in control pressure. The hydraulic pumps are therefore controlled such that the amount of discharge increases as the control pressure decreases. This is to allow a sufficient amount of hydraulic oil to flow into hydraulic actuators while they are operated. On the other hand, the hydraulic pumps are controlled such that the amount of discharge decreases as the control pressure increases. This is to prevent wasteful discharge of hydraulic oil when no hydraulic actuator is being operated. Also, the amount of discharge from the hydraulic pumps is controlled by way of power control as well. Power control refers to a function to adjust the amount of discharge from hydraulic pumps such that the suction power, which is represented by the product of the amount of discharge and the discharge pressure of the hydraulic pumps, is less than the output power of the engine serving as a source of drive.

In the excavator described above, the smaller one of the amount of discharge determined by negative control and the amount of discharge determined by power control is employed as the amount of discharge from the hydraulic pumps. Then, while a traveling operation is in progress, the amount of discharge determined by negative control is usually employed as the amount of discharge from the hydraulic pumps.

### Citation List

### Patent Document

Patent Document 1: Japanese Patent No. 4843105

### Summary of Invention

### Technical Problem

However, in the negative control hydraulic system disclosed in patent document 1, the relationship between the amount of discharge from the hydraulic pumps and the control pressure is set on a fixed basis. Therefore, while a traveling operation is in progress, a situation in which the hydraulic pumps discharge more hydraulic oil than necessary to the traveling hydraulic motor, or a situation in which the hydraulic pumps cannot discharge a necessary amount of hydraulic oil to the traveling hydraulic motor might arise.

In view of the foregoing, it is desirable to provide an excavator equipped with a negative control hydraulic system that can control the amount of discharge from hydraulic pumps more flexibly when traveling operations are in progress.

### Solution to Problem

According to an embodiment of the present invention, an excavator includes: a lower traveling body; an upper rotating body mounted on the lower traveling body; a drive source mounted in the upper rotating body; a hydraulic pump driven by the drive source; an operation device; and a control device, and, in this excavator, the control device controls a flow rate of the hydraulic pump based on a low-load work characteristic, and changes the low-load work characteristic according to details of an operation performed on the operation device.

### Advantageous Effects of Invention

As described above, it is possible to provide an excavator equipped with a negative control hydraulic system that can control the amount of discharge from hydraulic pumps more flexibly.

### Brief Description of Drawings

[FIG. 1] FIG. 1 is a side view of an excavator according to an embodiment of the present invention;
[FIG. 2] FIG. 2 is a schematic diagram that illustrates an example structure of a drive system mounted in the excavator of FIG. 1;
[FIG. 3] FIG. 3 is a diagram that illustrates an example structure of amount-of-discharge control functions;
[FIG. 4] FIG. 4 is a diagram that illustrates an example of the contents of a reference table;
[FIG. 5] FIG. 5 is a diagram that illustrates another example of the contents of a reference table;
[FIG. 6] FIG. 6 is a diagram that illustrates yet another example of the contents of a reference table;
[FIG. 7] FIG. 7 is a diagram that illustrates yet another example of the contents of a reference table; and
[FIG. 8] FIG. 8 is a diagram that illustrates yet another example of the contents of a reference table.

### Description of Embodiments

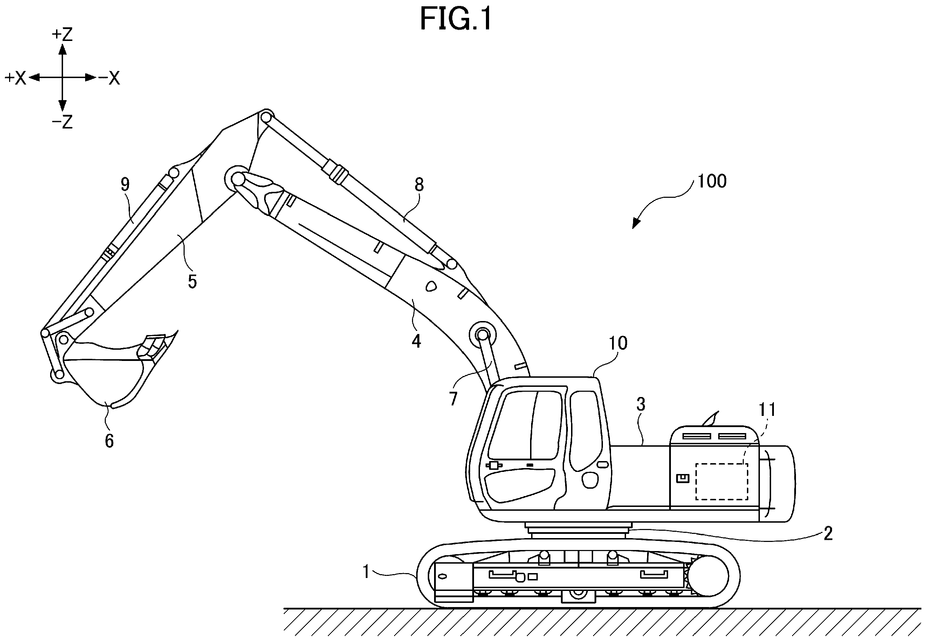

First, an excavating machine (excavator 100), which serves as a construction machine according to an embodiment of the present invention, will be described below with reference to FIG. 1. FIG. 1 is a side view of the excavator 100. In the excavator 100 illustrated in FIG. 1, an upper rotating body 3 is rotatably mounted on a lower traveling body 1 via a rotating mechanism 2. A boom 4, which serves as a working part, is attached to the upper rotating body 3. An arm 5, which also serves as a working part, is attached to the tip of the boom 4, and a bucket 6, which also serves as a working part and an end attachment, is attached to the tip of the arm 5. The boom 4, arm 5, and bucket 6 constitute an excavating attachment, which is an example of an attachment. The boom 4 is driven by a boom cylinder 7, the arm 5 is driven by an arm cylinder 8, and the bucket 6 is driven by a bucket cylinder 9. In the upper rotating body 3, a cabin 10 is formed; furthermore, a source of power such as an engine 11 is mounted.

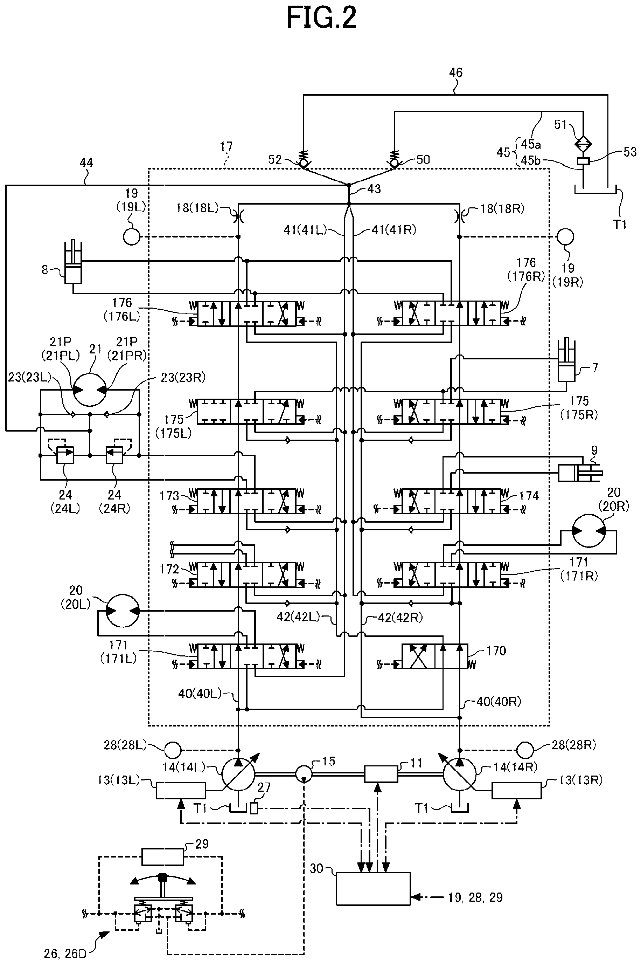

FIG. 2 is a diagram that illustrates an example structure of a drive system that is mounted in the excavator 100 of FIG. 1. In FIG. 2, the double lines are mechanical power transmission lines, the solid lines are hydraulic oil lines, the dashed lines are pilot lines, and the dashed-and-dotted lines are electrical control lines.

The drive system of the excavator 100 mainly includes an engine 11, pump regulators 13, main pumps 14, a pilot pump 15, an operation device 26, discharge pressure sensors 28, an operation sensor 29, a controller 30, and the like.

The engine 11 is an example of a source of drive for the excavator 100. The drive source may be an electric motor, a fuel cell, a hydrogen-fueled engine, or the like. According to the present embodiment, the engine 11 is a diesel engine that works such that a predetermined number of rotations per unit time is maintained. The engine 11 has outputs shafts that are connected to the respective input shafts of the main pumps 14 and the pilot pump 15.

Each main pump 14 is an example of a hydraulic pump, and is structured to supply hydraulic oil to the control valve unit 17. According to the present embodiment, the main pumps 14 are swash-plate variable displacement hydraulic pumps, and include a left main pump 14L and a right main pump 14R.

The pump regulators 13 are structured to control the amount of discharge from the main pumps 14. According to the present embodiment, the pump regulators 13 control the amount of discharge from the main pumps 14 by adjusting the tilting angle of the swashplates of the main pumps 14 in accordance with commands from the controller 30. The pump regulators 13 may output information related to the tilting angle of the swashplates to the controller 30. To be more specific, the pump regulators 13 include a left pump regulator 13L that controls the amount of discharge from the left main pump 14L, and a right pump regulator 13R that controls the amount of discharge from the right main pump 14R.

The pilot pump 15 is structured to supply hydraulic oil to various hydraulic equipment, including the operation device 26. According to the present embodiment, the pilot pump 15 is a fixed displacement hydraulic pump. However, the pilot pump 15 may be omitted as well. In this case, the functions of the pilot pump 15 may be imparted to the main pumps 14. That is, in addition to the function to supply hydraulic oil to the control valve unit 17, the main pumps 14 may also have a function to supply hydraulic oil to the operation device 26 and so forth after reducing the pressure of hydraulic oil by means of apertures or the like.

The control valve unit 17 is structured to operably house multiple control valves. According to the present embodiment, the control valve unit 17 includes multiple control valves that control the flow of hydraulic oil discharged from the main pumps 14. The control valve unit 17 is structured such that the hydraulic oil discharged from the main pumps 14 can be supplied, selectively, to one or more hydraulic actuators through these control valves. The control valves control the flow rate of hydraulic oil that flows from the main pumps 14 to the hydraulic actuators and the flow rate of hydraulic oil from the hydraulic actuators to the hydraulic oil tanks T1. The hydraulic actuators include the boom cylinder 7, the arm cylinder 8, the bucket cylinder 9, traveling hydraulic motors 20, and a rotation hydraulic motor 21. The traveling hydraulic motors 20 include a left traveling hydraulic motor 20L and a right traveling hydraulic motor 20R.

The rotation hydraulic motor 21 is a hydraulic motor that allows the upper rotating body 3 to rotate. Oil lines 21P, connected to the ports of the rotation hydraulic motor 21, are connected to an oil line 44 via relief valves 22 and check valves 23. To be more specific, the oil lines 21P include a left oil line 21PL and a right oil line 21PR. The relief valves 22 include a left relief valve 22L and a right relief valve 22R. The check valves 23 include a left check valve 23L and a right check valve 23R.

The left relief valve 22L opens when the pressure of hydraulic oil in the left oil line 21PL reaches a predetermined relief pressure, and sends the hydraulic oil in the left oil line 21PL to the oil line 44. Also, the right relief valve 22R opens when the pressure of hydraulic oil in the right oil line 21PR reaches a predetermined relief pressure, and sends the hydraulic oil in the right oil line 21PR to the oil line 44.

The left check valve 23L opens when the pressure of hydraulic oil in the left oil line 21PL becomes lower than the pressure of hydraulic oil in the oil line 44, so that hydraulic oil is supplied from the oil line 44 to the left oil line 21PL. The right check valve 23R opens when the pressure of hydraulic oil in the right oil line 21PR becomes lower than the pressure of hydraulic oil in the oil line 44, so that hydraulic oil is supplied from the oil line 44 to the right oil line 21PR. Structured thus, the check valves 23 can supply hydraulic oil to the suction ports when the rotation hydraulic motor 21 is braking.

The operation device 26 is a device that the operator uses to operate the hydraulic actuators. According to the present embodiment, the operation device 26 is hydraulic and supplies the hydraulic oil discharged from the pilot pump 15 to the pilot ports of control valves that correspond to respective hydraulic actuators, via a pilot line. Pilot pressure is the pressure of hydraulic oil supplied to each pilot port, and is a pressure that is determined by the direction and amount in which the levers or pedals that constitute the operation device 26 and that correspond to respective hydraulic actuators are operated. However, the operation device 26 may be electrical as well.

To be more specific, the operation device 26 includes a left operation lever, a right operation lever, a left traveling lever, a right traveling lever, a left traveling pedal, a right traveling pedal, and so forth. The left operation lever functions as an arm operation lever and a rotation operation lever. The right operation lever functions as a boom operation lever and a bucket operation lever. Hereinafter, when reference is made to the "traveling operation device 26D," this refers to at least one of the left traveling lever, the right traveling lever, the left traveling pedal, and the right traveling pedal. Also, the left traveling lever and the right traveling lever may be referred to as "traveling levers." The left traveling pedal and the right traveling pedal may be referred to as "traveling pedals." Also, at least one of the left traveling lever and the left traveling pedal may be referred to as a "left traveling operation device," and at least one of the right traveling lever and the right traveling pedal may be referred to as a "right traveling operation device."

A temperature sensor 27 is provided, structured to detect the temperature of hydraulic oil in a hydraulic oil tank T1 and output the detected values to the controller 30.

The discharge pressure sensors 28 are structured to detect discharge pressure in the main pumps 14 and output the detected values to the controller 30. With the present embodiment, the discharge pressure sensors 28 include a left discharge pressure sensor 28L that detects the discharge pressure of the left main pump 14L, and a right discharge pressure sensor 28R that detects the discharge pressure of the right main pump 14R.

The operation sensor 29 is a device for detecting the details of operations that the operator performs on the operation device 26. The details of operations include, for example, the direction of an operation, the amount of an operation (the angle of an operation), and so forth. According to the present embodiment, the operation sensor 29 is a pressure sensor that detects the direction and amount in which the levers or pedals constituting the operation device 26 and corresponding to respective hydraulic actuators are operated, in the form of pressure. The detected values are output to the controller 30. However, the details of user operations on the operation device 26 may be detected by using outputs of a device other than a pressure sensor, such as an operation angle sensor, acceleration sensor, angular velocity sensor, resolver, voltmeter, ammeter, and so forth.

The controller 30 is an example of a processing circuit, and functions as a control device for controlling the excavator 100. According to the present embodiment, the controller 30 is formed with a computer that includes a CPU, a volatile storage device, a non-volatile storage device, and so forth.

The center bypass oil lines 40 are hydraulic oil lines that pass through the control valves provided in the control valve unit 17, and include a left center bypass oil line 40L and a right center bypass oil line 40R.

A control valve 170 is a spool valve that serves as a straight travel valve. The control valve 170 switches the flow of hydraulic oil such that hydraulic oil is supplied from the main pumps 14 to both the left traveling hydraulic motor 20L and the right traveling hydraulic motor 20R in order to improve the linearity of the movement of the lower traveling body 1. To be more specific, if the traveling hydraulic motors 20 and one hydraulic actuator are operated at the same time, the control valve 170 is switched such that the left main pump 14L can supply hydraulic oil to both the left traveling hydraulic motor 20L and the right traveling hydraulic motor 20R. If none of the hydraulic actuators is operated, the control valve 170 is switched such that the left main pump 14L can supply hydraulic oil to the left traveling hydraulic motor 20L and the right main pump 14R can supply hydraulic oil to the right traveling hydraulic motor 20R.

Control valves 171 are spool valves that switch the flow of hydraulic oil such that the hydraulic oil discharged from the main pumps 14 is supplied to the traveling hydraulic motor 20, and the hydraulic oil discharged from the traveling hydraulic motor 20 is sent to a hydraulic oil tank. To be more specific, the control valves 171 include a control valve 171L and a control valve 171R. The control valve 171L switches the flow of hydraulic oil such that the hydraulic oil discharged from the left main pump 14L is supplied to the left traveling hydraulic motor 20L and the hydraulic oil discharged from the left traveling hydraulic motor 20L is sent to the hydraulic oil tank. The control valve 171R switches the flow of hydraulic oil such that the hydraulic oil discharged from the left main pump 14L or the right main pump 14R is supplied to the right traveling hydraulic motor 20R and the hydraulic oil discharged from the right traveling hydraulic motor 20R is sent to the hydraulic oil tank.

A control valve 172 is a spool valve that switches the flow of hydraulic oil such that the hydraulic oil discharged from the left main pump 14L is supplied to an optional hydraulic actuator, and the hydraulic oil discharged from the optional hydraulic actuator is sent to the hydraulic oil tank. The optional hydraulic actuator is, for example, a grapple open/close cylinder.

A control valve 173 is a spool valve that switches the flow of hydraulic oil such that the hydraulic oil discharged from the left main pump 14L is supplied to the rotation hydraulic motor 21, and the hydraulic oil discharged from the rotation hydraulic motor 21 is sent to the hydraulic oil tank.

A control valve 174 is a spool valve for supplying the hydraulic oil discharged from the right main pump 14R to the bucket cylinder 9 and sending the hydraulic oil in the bucket cylinder 9 to the hydraulic oil tank.

Control valves 175 are spool valves that switch the flow of hydraulic oil such that the hydraulic oil discharged from the main pump 14 is supplied to the boom cylinder 7, and the hydraulic oil in the boom cylinder 7 is sent to the hydraulic oil tank. To be more specific, the control valves 175 include a control valve 175L and a control valve 175R. The control valve 175L works only when an operation for raising the boom 4 is performed, and does not work when an operation for lowering the boom 4 is performed.

Control valves 176 are spool valves that switch the flow of hydraulic oil such that the hydraulic oil discharged from the main pumps 14 is supplied to the arm cylinder 8, and the hydraulic oil in the arm cylinder 8 is sent to the hydraulic oil tank. To be more specific, the control valves 176 include a control valve 176L and a control valve 176R.

According to the present embodiment, the control valves 170 to 176 are pilot spool valves, but these control valves 170 to 176 may be electromagnetic spool valves as well if, for example, the operation device 26 is an electrical device.

If the operation levers of the operation device 26 are electrical, the amount of lever operation is input to the controller 30 in the form of an electrical signal. Also, solenoid valves are placed between the pilot pump 15 and the pilot port of each control valve. The solenoid valves are configured to work in response to electrical signals from the controller 30. According to this structure, when an operation lever is operated manually, the controller 30 controls the solenoid valves by using an electric signal that matches the amount of the lever operation, thereby increasing and decreasing the pilot pressure and moving each control valve. Note that each control valve may be formed with an electromagnetic spool valve, as described above. In this case, the electromagnetic spool valves work in response to electrical signals output from the controller 30 in accordance with the amount of lever operation on electrical operation levers.

Return oil lines 41 are hydraulic oil lines formed inside the control valve unit 17, and include a left return oil line 41L and a right return oil line 41R. The hydraulic oil that flows out of the hydraulic actuators and pass through the control valves 171 to 176 flows toward the hydraulic oil tank T1 through the return oil lines 41.

Parallel oil lines 42 are hydraulic oil lines that run parallel to the center bypass oil lines 40. According to the present embodiment, the parallel oil lines 42 include a left parallel oil line 42L that runs parallel to the left center bypass oil line 40L, and a right parallel oil line 42R that runs parallel to the right center bypass oil line 40R. When the flow of hydraulic oil in the left center bypass oil line 40L is limited or blocked by the control valve 171L, 172, 173, or 175L, the left parallel oil line 42L can supply hydraulic oil to control valves that are located more downstream. When the flow of hydraulic oil in the right center bypass oil line 40R is limited or blocked by the control valve 171R, 174, or 175R, the right parallel oil line 42R can supply hydraulic oil to control valves that are located more downstream.

Here, the negative control employed in the hydraulic system illustrated in FIG. 2 will be described. The center bypass oil lines 40 have apertures 18, placed between each most downstream control valve 175 and the hydraulic oil tank T1. The flow of hydraulic oil discharged from the main pumps 14 is limited by the apertures 18. The apertures 18 generate control pressures (negative control pressures) for controlling the pump regulators 13. To be more specific, the apertures 18 are fixed apertures, meaning that their aperture area is fixed, and include a left aperture 18L and a right aperture 18R. As the aperture area increases, the apertures 18 tend to be more stable against unexpected changes in control pressure. Also, as the aperture area becomes smaller, the apertures 18 tend to be more responsive to changes in control pressure. The flow of the hydraulic oil discharged from the left main pump 14L is limited by the left aperture 18L. The left aperture 18L generates control pressures for controlling the left pump regulator 13L. Similarly, the flow of the hydraulic oil discharged from the right main pump 14R is limited by the right aperture 18R. The right aperture 18R produces control pressures for controlling the right pump regulator 13R.

Control pressure sensors 19 serve as sensors for detecting the control pressures (negative control pressures) produced upstream of the apertures 18, and include a left control pressure sensor 19L and a right control pressure sensor 19R. With the present embodiment, the control pressure sensors 19 are structured to output the detected values to the controller 30. The controller 30 outputs commands to match the control pressures, to the pump regulators 13. The pump regulators 13 control the amount of discharge from the main pumps 14 by adjusting the tilting angle of the swashplates of the main pumps 14 in accordance with the commands. To be more specific, the pump regulators 13 lower the amount of discharge from the main pumps 14 when the control pressure is greater, and increase the amount of discharge from the main pumps 14 when the control pressure is lower.

Negative control allows the hydraulic system of FIG. 2 to substantially prevent wasteful energy consumption in the main pumps 14 when no hydraulic actuators are operated. This wasteful energy consumption includes the pumping loss produced by the hydraulic oil discharged from the main pumps 14 in the center bypass oil lines 40. In turn, when a hydraulic actuator is operated, arrangements are made such that a sufficient amount of hydraulic oil can be supplied from the main pumps 14 to the hydraulic actuator being operated.

Downstream of the apertures 18, the center bypass oil lines 40 and return oil lines 41 are connected to a junction point of an oil line 43. The oil line 43 branches into two branches downstream of the junction point, which are then connected to an oil line 45 and an oil line 46 outside the control valve unit 17. That is, the individual flows of hydraulic oil in the center bypass oil lines 40 and the return oil lines 41 join together at the oil line 43, and, subsequently, travel in the oil line 45 or the oil line 46, and reach the hydraulic oil tank T1. Also, the oil line 43 is connected to the rotation hydraulic motor 21, via an oil line 44 that serves as a hydraulic oil line for compensating for the shortage of hydraulic oil on the suction side of the rotation hydraulic motor 21.

The oil line 45 is a hydraulic oil line that connects between the oil line 43 and the hydraulic oil tank T1. A check valve 50, an oil cooler 51, and a filter 53 are placed on the oil line 45.

The check valve 50 opens when the difference in pressure between its primary side and secondary side exceeds a predetermined valve opening pressure difference. According to the present embodiment, the check valve 50 is a spring-type check valve. The check valve 50 opens when the upstream pressure is higher than the downstream pressure and the pressure difference exceeds the valve opening pressure difference, and the hydraulic oil in the control valve unit 17 flows out toward the oil cooler 51. Structured thus, the check valve 50 can maintain the pressures of hydraulic oil in the oil line 43 and the oil line 44 at higher levels than the valve opening pressure, and reliably compensate for the shortage of hydraulic oil on the suction side of the rotation hydraulic motor 21. In this case, the valve opening pressure serves as the lower limit of back pressure on the apertures 18. The back pressure on the apertures 18 increases as the flow rate of hydraulic oil that passes through the check valve 50 increases. The check valve 50 may be integrated in the control valve unit 17, or may be omitted. In the event the check valve 50 is omitted, the pressure loss in each of the oil line 45, check valve 50, oil cooler 51, and filter 53 becomes back pressure on the apertures 18. The back pressure on the apertures 18 increases as the flow rate of hydraulic oil that passes through the oil line 45 increases.

The oil cooler 51 is a device for cooling the hydraulic oil that circulates in the hydraulic system. According to the present embodiment, the oil cooler 51 is included in a heat exchanger unit that is cooled by a cooling fan driven by the engine 11. The heat exchanger unit includes a radiator, an intercooler, the oil cooler 51, and so forth. Also, according to the present embodiment, the oil line 45 includes an oil line part 45a that connects the check valve 50 and the oil cooler 51, and an oil line part 45b that connects the oil cooler 51 and the hydraulic oil tank T1. A filter 53 is provided in the oil line part 45b.

The oil line 46 is a bypass oil line that bypasses the oil cooler 51. According to the present embodiment, one end of the oil line 46 is connected to the oil line 43, and the other end is connected to the hydraulic oil tank T1. One end of the oil line 46 may be connected to the oil line 45 between the check valve 50 and the oil cooler 51. Also, a check valve 52 is provided on the oil line 46.

Like the check valve 50, the check valve 52 is a valve that opens when the difference in pressure between the primary side and the secondary side exceeds a predetermined valve opening pressure difference. According to the present embodiment, the check valve 52 is a spring-type check valve. The check valve 52 opens when the upstream pressure is higher than the downstream pressure and the pressure difference exceeds the valve opening pressure difference, and the hydraulic oil in the control valve unit 17 flows out toward the hydraulic oil tank T1. The valve opening pressure difference in the check valve 52 is greater than that of the check valve 50. Therefore, the hydraulic oil in the control valve unit 17 first flows through the check valve 50, and then flows through the check valve 52 when the pressure exceeds the valve opening pressure due to the resistance against the hydraulic oil when the hydraulic oil flows through the oil cooler 51. The check valve 52 may be integrated in the control valve unit 17.

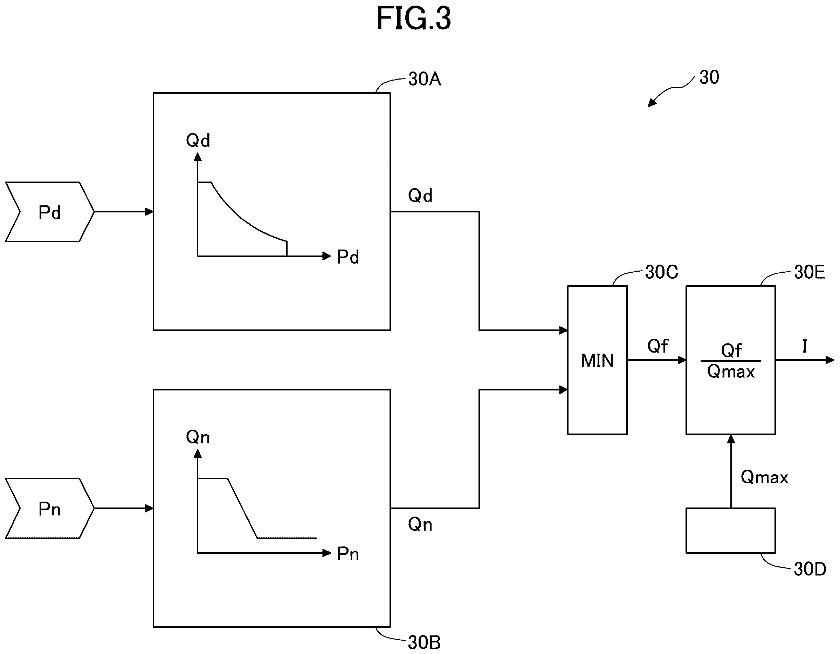

Next, examples of the functions of the controller 30 to control the amount of discharge from the main pumps 14 (hereinafter referred to as "amount-of-discharge control functions") will be described with reference to FIG. 3. FIG. 3 shows an example structure of the controller 30 that implements the amount-of-discharge control functions. According to the present embodiment, the controller 30 includes a power control part 30A, an energy saving control part 30B, a minimum value selection part 30C, a maximum value setting part 30D, and a current command output part 30E.

The power control part 30A is a control part that implements power control, which is one of the functions to control the amount of discharge from the main pumps 14. The power control part 30A is structured to find a command value, Qd, for the amount of discharge, Q, based on a discharge pressure, Pd, of the main pumps 14. The amount of discharge Q is, for example, the displacement volume, which is the amount of hydraulic oil discharged from the main pumps 14 when the main pumps 14 rotate once. However, the amount of discharge Q may be the amount of hydraulic oil discharged from the main pumps 14 per unit time (for example, one minute). Power control refers to a function to adjust the amount of discharge from the main pumps 14 such that the suction power, which is represented by the product of the amount of discharge and the discharge pressure of the main pumps 14, is less than or equal to the output power of the engine 11. According to the present embodiment, the power control part 30A acquires the discharge pressure Pd output from the discharge pressure sensor 28. Then, the power control part 30A looks up the reference table and finds the command value Qd that matches the acquired discharge pressure Pd. In the reference table, which relates to the first PQ diagram, the relationships between the maximum allowable suction power (for example, maximum allowable suction horse power) of the main pumps 14, discharge pressure Pd, and command value Qd are held in a referable way, and the table is stored in a non-volatile storage device in advance. For example, the power control part 30A can search the reference table by using a preset maximum allowable suction horse power of the main pumps 14 and a discharge pressure Pd output from the discharge pressure sensor 28, as search keys, and find a unique command value Qd.

The energy saving control part 30B is a control part that implements negative control, which is one of the functions to control the amount of discharge from the main pumps 14, and structured to find the command value Qn for the amount of discharge based on a control pressure Pn. According to the present embodiment, the energy saving control part 30B acquires a control pressure Pn output from the control pressure sensor 19. Then, the energy saving control part 30B looks up the reference table and finds the command value Qn that matches the acquired control pressure Pn. In the reference table, which relates to the second PQ diagram, the relationship between control pressure Pn and command value Qn is held in a referable way, and the table is stored in a non-volatile storage device in advance.

The minimum value selection part 30C is structured to select and output the minimum value from multiple input values. According to the present embodiment, the minimum value selection part 30C is structured to output the smaller one between the command value Qd and the command value Qn as a final command value Qf.

The command value Qn found by the energy saving control part 30B is typically selected by the minimum value selection part 30C when a relatively low-load job is performed, such as finishing, leveling, traveling, and so forth. That is, when relatively low-load jobs are performed, the low-load work characteristic represented by the second PQ diagram is employed. On the other hand, the command value Qd found by the power control part 30A is typically selected by the minimum value selection part 30C when a relatively high-load job is performed, including excavation. That is, when relatively high-load jobs are performed, the high-load work characteristic represented by the first PQ diagram is employed. In this way, the command value Qd selected by minimum value selection part 30C determines whether the main pumps 14 are controlled based on low-load work characteristic or high-load work characteristic.

The maximum value setting part 30D is structured to output a maximum command value Qmax. The maximum command value Qmax is a command value that matches the maximum amount of discharge of the main pumps 14. According to the present embodiment, the maximum value setting part 30D is structured to output the maximum command value Qmax that is stored in a non-volatile storage device or the like in advance, to the current command output part 30E.

The current command output part 30E is structured to output a current command to the pump regulators 13. According to the present embodiment, the current command output part 30E outputs a current command, I, which is found based on the final command value Qf output from the minimum value selection part 30C and the maximum command value Qmax output from the maximum value setting part 30D, to the pump regulators 13. Note that the current command output part 30E may output a current command I that is found based on the final command value Qf, to the pump regulators 13.

In this manner, the controller 30 controls the amount of discharge from the main pumps 14. In the illustrated example, the controller 30 controls the amount of discharge from the left main pump 14L and the amount of discharge from the right main pump 14R separately. To be more specific, the controller 30 finds the current command for the left pump regulator 13L based on the discharge pressure of the left main pump 14L, which is detected by the left discharge pressure sensor 28L, and the control pressure of hydraulic oil in the left center bypass oil line 40L, which is detected by the left control pressure sensor 19L. Then, the controller 30 controls the amount of discharge from the left main pump 14L by outputting the current command to the left pump regulator 13L. Also, the controller 30 finds the current command for the right pump regulator 13R based on the discharge pressure of the right main pump 14R, which is detected by the right discharge pressure sensor 28R, and the control pressure of hydraulic oil in the right center bypass oil line 40R, which is detected by the right control pressure sensor 19R. Then, the controller 30 controls the amount of discharge from the right main pump 14R by outputting the current command to the right pump regulator 13R.

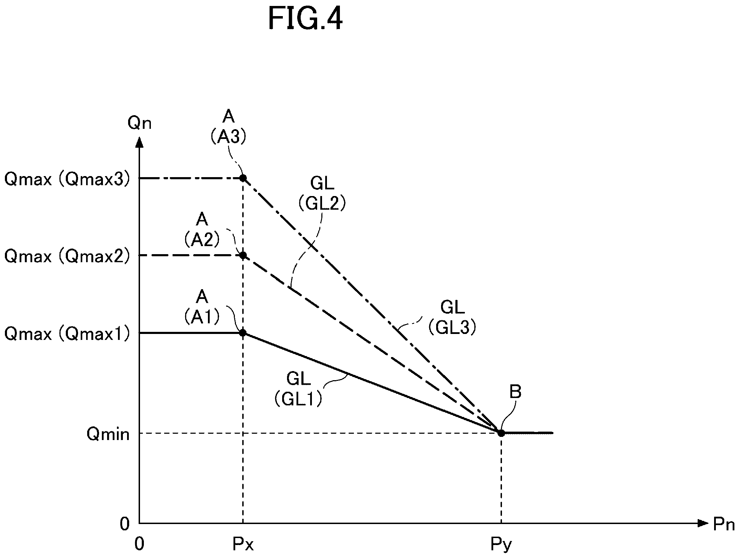

Next, the contents of the reference table, which the energy saving control part 30B looks up, will be described with reference to FIG. 4. FIG. 4 is a diagram that illustrates the relationship between control pressure Pn and command value Qn, which is the contents of the reference table. To be more specific, in FIG. 4, control pressures Pn, detected by the control pressure sensor 19, are plotted on the horizontal axis, and command values Qn are plotted on the vertical axis. The polylines including the slope lines GL show the relationships between command values Qn and control pressures Pn. The command value Qn corresponds to the target amount of discharge from the main pumps 14. The controller 30 controls the pump regulators 13 such that the actual amount of discharge Q from the main pumps 14 matches the target amount of discharge. The reference table represented in FIG. 4 is used when controlling the amount of discharge from each of the left main pump 14L and right main pump 14R. When controlling the amount of discharge from the left main pump 14L, the horizontal axis in FIG. 4 is the control pressure detected by the left control pressure sensor 19L, and the vertical axis in FIG. 4 is the command value for the amount of discharge from the left main pump 14L. Similarly, when controlling the amount of discharge from the right main pump 14R, the horizontal axis in FIG. 4 is the control pressure detected by the right control pressure sensor 19R, and the vertical axis in FIG. 4 is the command value for the amount of discharge from the right main pump 14R.

To be more specific, FIG. 4 illustrates the contents of the reference table to look up when the traveling operation device 26D is operated in the forward-traveling direction. FIG. 4 shows the relationship between control pressure Pn and command value Qn when the traveling operation device 26D is operated slightly, by the solid line. Assuming that the amount of lever operation when a traveling lever is in the neutral position is 0% and the amount of lever operation when a traveling lever is tilted to the maximum is 100%, the amount of lever operation when a traveling lever is operated "slightly" is less than 20%. Also, FIG. 4 shows the relationship between control pressure Pn and command value Qn when a traveling lever is operated in a half-lever operation, by the dashed line. A "half-lever operation" means, for example, an operation in which the amount of lever operation is 20% or more and less than 80%. Similarly, FIG. 4 shows the relationship between control pressure Pn and command value Qn when a traveling lever is operated in a full-lever operation, by the dashed-and-dotted line. A full-lever operation means, for example, an operation in which the amount of lever operation is 80% or more.

According to the present embodiment, the energy saving control part 30B is structured to find a command value Qn that matches a control pressure Pn by using a slope line GL that passes through an uppermost point A and a lowermost point B.

The uppermost point A is a point that determines the upper end of each slope line GL, and is represented by a maximum command value Qmax and a first setting pressure Px. The maximum command value Qmax is the upper limit of command values that can be used in negative control, and is, for example, a setting value that corresponds to a tilting angle of the swashplates of the main pumps 14 that is a predetermined angle smaller than the maximum tilting angle of the swashplates. The first setting pressure Px is a setting value that is set regardless of the magnitude of the amount of lever operation when a traveling lever is operated in the forward-traveling direction. Note that, in the example illustrated in FIG. 4, the magnitude of the amount of lever operation when a traveling lever is operated in the forward-traveling direction is the magnitude of forward pilot pressure, which is the pilot pressure when a traveling lever is operated in the forward-traveling direction, and is detected by the operation sensor 29, which serves as a pressure sensor. However, the magnitude of the amount of lever operation when a traveling lever is operated in the forward-traveling direction may be detected by a device other than a pressure sensor, such as an operation angle sensor, acceleration sensor, angular velocity sensor, resolver, voltmeter, ammeter, and so forth.

The lowermost point B is a point that determines the lower end of each slope line GL, and is represented by a minimum command value Qmin and a second setting pressure Py. The minimum command value Qmin is the lower limit of command values that can be used in negative control, and, for example, is a setting value that corresponds to a tilting angle of the swashplates of the main pumps 14 that is a predetermined angle greater than the minimum tilting angle of the swashplates (for example, a tilting angle of the swashplates corresponding to a standby flow rate). The second setting pressure Py is a value that is set regardless of the magnitude of the amount of lever operation when a traveling lever is operated in the forward-traveling direction. For example, the second setting pressure Py corresponds to the control pressure when hydraulic oil passes through the apertures 18 at a standby flow rate.

In the example illustrated in FIG. 4, the energy saving control part 30B is structured such that, by vertically changing the position of the uppermost point A, that is, by changing the maximum command value Qmax, the relationship between control pressure Pn and command value Qn can be controlled.

To be more specific, when a traveling lever is operated slightly, when a traveling lever is operated in a half-lever operation, and when a traveling lever is operated in a full-lever operation, the energy saving control part 30B changes the position of the uppermost point A, so that the relationship between control pressure Pn and command value Qn is controlled to suit the condition of the excavator 100 in each case. Note that, in the example illustrated in FIG. 4, for ease of description, the energy saving control part 30B changes the position of the uppermost point A in three steps, that is, when a traveling lever is operated slightly, when a traveling lever is operated in a half-lever operation, and when a traveling lever is operated in a full-lever operation. However, the energy saving control part 30B may also be structured to change the position of the uppermost point A in four or more steps, depending on the magnitude of the amount of lever operation when a traveling lever is operated in the forward-traveling direction, or may be structured to change the position of the uppermost point A in a non-step-by-step fashion, depending on the magnitude of the amount of lever operation when a traveling lever is operated in the forward-traveling direction.

To be more specific, the energy saving control part 30B is structured such that, when a traveling lever is operated slightly, the uppermost point A changes to an uppermost point A1 (the point used when the maximum command value Qmax is a setting value Qmax1) and the slope line GL changes to a slope line GL1, as shown by the solid line in FIG. 4.

Also, the energy saving control part 30B is structured such that, when a traveling lever is operated in a half-lever operation, the uppermost point A changes to an uppermost point A2 (the point used when the maximum command value Qmax is a setting value Qmax2) and the slope line GL changes to a slope line GL2, as shown by the dashed line in FIG. 4. Also, the energy saving control part 30B is structured such that, when a traveling lever is operated in a full-lever operation, the uppermost point A changes to an uppermost point A3 (the point used when the maximum command value Qmax is a setting value Qmax3) and the slope line GL changes to a slope line GL3, as shown by the dashed-and-dotted line in FIG. 4. Note that the setting value Qmax3 may correspond to the maximum tilting angle of the swashplates of the main pumps 14, for example.

In this way, by changing the position of the uppermost point A vertically according to the amount of operation in the forward-traveling direction on the traveling operation device 26D, the energy saving control part 30B can prevent or substantially prevent a case in which the amount of hydraulic oil that flows into the hydraulic motor 20 becomes unstable while the excavator 100 is traveling forward. If the amount of hydraulic oil becomes unstable, the operator will rock back and forth, which makes stable traveling operation difficult, and which makes the amount of hydraulic oil that flows into the traveling hydraulic motor 20 even more unstable. In some cases, the operator may cause hunting or the like, which makes the rotation speed of the engine 11 unstable. The energy saving control part 30B can prevent or substantially prevent problems such as hunting from occurring. In this way, the energy saving control part 30B can enhance the traveling operability of the excavator 100.

For example, when a traveling lever is operated in the forward-traveling direction to make the excavator 100 in standby mode start traveling forward, that is, to accelerate the excavator 100, the amount of hydraulic oil that passes through the apertures 18 decreases. This is because most of the hydraulic oil discharged from the main pumps 14 is supplied to the traveling hydraulic motor 20. Standby mode refers to the state of the excavator 100 when, for example, the engine 11 is running and the operation device 26 is not being operated.

If hydraulic oil is supplied to the traveling hydraulic motor 20 and in turn less hydraulic oil passes through the apertures 18, the control pressure Pn (negative control pressure) decreases, and so the command value Qn increases as illustrated in FIG. 4. In the event the slope line GL3 is used as the slope line GL on a fixed basis, the command value Qn increases at a greater rate than when the slope line GL1 is used as the slope line GL on a fixed basis, and the command value Qn reaches a maximum command value Qmax (setting value Qmax3) that is greater than the maximum command value Qmax (setting value Qmax1) for the slope line GL1. In response to this increase of forward pilot pressure, the rate of increase in the amount of discharge from the main pumps 14 tends to become too large, and the operator then may not be able to perform forward-traveling operations in a stable manner. This is because the excavator 100 rocks back and forth. This rocking of the excavator 100 may cause the operator, seated in the cabin 10 of the excavator 100, to be rocked back and forth, and adversely affect the operator's operation of the operation device 26.

On the other hand, if the slope line GL1 is used as the slope line GL that matches the amount of lever operation (slight operation) of a traveling lever when the excavator 100 starts traveling forward, the upper limit of command values Qn is limited to a setting value Qmax1, which is smaller than the setting value Qmax3. Consequently, the rate of increase in the amount of discharge from the main pumps 14 in response to an increase in forward pilot pressure is kept lower than when the slope line GL3 is used as the slope line GL. As a result of this, the rocking of the excavator 100 in the front-back direction when a forward-traveling operation is started is reduced, so that the operator can move the excavator 100 forward smoothly.

Also, as illustrated in FIG. 4, the uppermost point A of each slope line GL moves to higher positions as the forward pilot pressure increases, that is, as the amount of lever operation of a traveling lever increases; the amount of discharge from the main pumps 14 is therefore not limited excessively.

To be more specific, by repositioning the uppermost point A as described above, the energy saving control part 30B can prevent the amount of discharge Q from becoming small when the excavator 100 travels forward in accordance in accordance with a full-lever operation.

For example, when a traveling lever is operated in the forward-traveling direction in a full-lever operation, if the slope line GL1, which is used in the event the lever is operated slightly, is used as the slope line GL on a fixed basis, the upper limit of command values Qn will be limited to the setting value Qmax1, which is smaller than the setting value Qmax3. In other words, although a full-lever operation is in progress and the amount of discharge Q from the main pumps 14 should be as large as possible, the tilting angle of the swashplates cannot be increased sufficiently.

In view of this, when the slope line GL3 is used as the slope line GL, the uppermost point A is set to an uppermost point A3. In this case, when the actual control pressure Pn is the first setting pressure Px, the energy saving control part 30B finds the setting value Qmax3 as the command value Qn. As a result of this, the main pumps 14 are controlled such that the tilting angle of the swashplates is maximized, so that a maximal amount of hydraulic oil can be discharged.

The same applies to the case where the excavator 100 that is moving forward is decelerated or stopped. For example, when the mode of a traveling lever's operation is switched back from a full-lever operation to a slight operation, the amount of hydraulic oil that passes through the apertures 18 increases. This is because most of the hydraulic oil discharged from the main pumps 14 is sent to the hydraulic oil tanks T1 through the center bypass oil lines 40.

As the amount of hydraulic oil that passes through the apertures 18 increases, the control pressure Pn (negative control pressure) also increases, and so the command value Qn becomes smaller, as illustrated in FIG. 4. In the event the slope line GL3 is used as the slope line GL on a fixed basis, the command value Qn becomes smaller at a higher rate of decline than when the slope line GL1 is used as the slope line GL on a fixed basis, and reaches the minimum command value Qmin. Because the slope line GL3 shows a relatively large inclination (rate of decline) like this, the rate of decline in the amount of discharge from the main pumps 14 in response to a decrease in forward pilot pressure tends to become too large; the operator then may not be able to perform forward-traveling operations in a stable fashion. This is because the excavator 100 rocks back and forth, as when the excavator 100 is accelerated.

On the other hand, if the slope line GL1 is used as the slope line GL to match the amount of a traveling lever's operation (slight operation) immediately before the excavator 100 stops, the upper limit of command values Qn is limited to the setting value Qmax1, which is smaller than the setting value Qmax3. Therefore, the rate of decline of the amount of discharge from the main pumps 14 in response to a decrease in forward pilot pressure can be made lower than when the slope line GL3 is used as the slope line GL. As a result of this, the rocking of the excavator 100 in the front-back direction during deceleration is reduced, and so the operator can decelerate the excavator 100 smoothly.

Also, the uppermost point A of the slope line GL moves to lower positions as the forward pilot pressure decreases, that is, as the amount of a traveling lever's operation decreases, as illustrated in FIG. 4. Consequently, even when the amount of a traveling lever's operation is reduced gradually, the amount of discharge from the main pumps 14 is prevented from changing too quickly.

That is, by repositioning the uppermost point A as described above, the energy saving control part 30B can prevent the amount of discharge Q from becoming unstable when the excavator 100 traveling forward is decelerated.

In this way, the controller 30 repositions the uppermost point A in the vertical direction by changing the mode of negative control-based flow rate control according to the details of the way the traveling operation device 26D is operated. By doing so, the amount of discharge Q from the main pumps 14 can be controlled more flexibly. Note that, hereinafter, the type of control that changes the mode of negative control-based flow rate control according to the details of the way the traveling operation device 26D is operated will also be referred to as "travel assist control." To be more specific, the energy saving control part 30B can adjust the slope line GL according to forward pilot pressure, thereby substantially preventing or preventing cases in which the amount of hydraulic oil to flow into the traveling hydraulic motor 20 becomes unstable. Therefore, the energy saving control part 30B can allow the excavator 100 to move forward smoothly, according to, for example, the details of operations that the operator performs on the traveling operation device 26D.

Note that the above description with reference to FIG. 4 applies when a traveling lever is operated in the forward-traveling direction. However, the above description may be applied likewise when a traveling pedal is operated in the forward-traveling direction, when a traveling lever is operated in the backward-traveling direction, and when a traveling pedal is operated in the backward-traveling direction.

Also, the above description may be applied when the left traveling lever and the right traveling lever are operated at the same time and the amount of lever operation is the same between both levers, that is, when the traveling operation device 26D is operated to make the excavator 100 move straight forward or backward. Note that a case in which the left traveling pedal and the right traveling pedal are operated at the same time and the amount of pedal operation is the same between both pedals may be an example of when the traveling operation device 26D is operated to make the excavator 100 move straight forward or backward. Also, the above description may be applied when the left traveling lever and the right traveling lever are operated at the same time and yet the amount of lever operation varies between the left traveling lever and the right traveling lever, that is, when the traveling operation device 26D is operated to make the excavator 100 travel on a curve. Also, a case in which the left traveling pedal and the right traveling pedal are operated at the same time and yet the amount of pedal operation varies between the left traveling pedal and the right traveling pedal may be an example of when the traveling operation device 26D is operated to make the excavator 100 travel on a curve.

Also, when the traveling operation device 26D is operated to make the excavator 100 travel on a curve, the controller 30 may make the contents of the reference table for the left traveling operation device (left main pump 14L) and the contents of the reference table for the right traveling operation device (right main pump 14R) different. For example, the controller 30 may configure the slope line GL1 for the left main pump 14L and the slope line GL1 for the right main pump 14R differently such that the height of the uppermost point A when the left traveling lever is operated slightly and the height of the uppermost point A when the right traveling lever is operated slightly are different.

Furthermore, the above description may be applied when either the left traveling lever or the right traveling lever is operated alone, or when either the left traveling pedal or the right traveling pedal is operated alone.

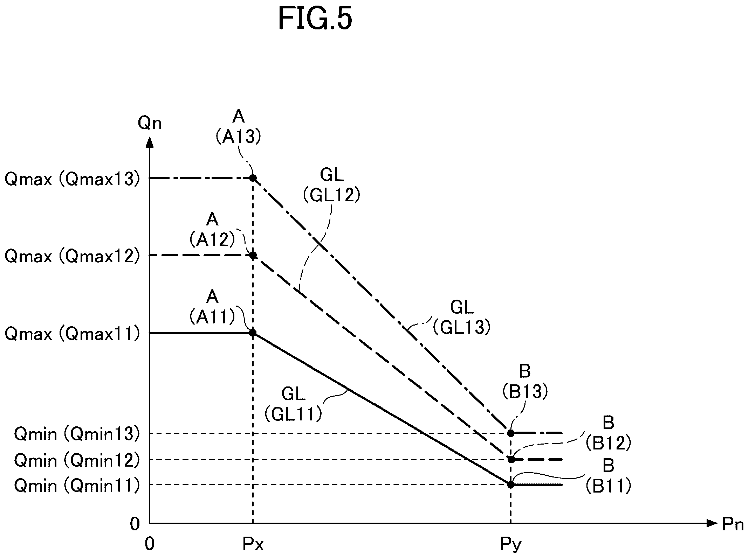

Next, another example of the contents of the reference table that the energy saving control part 30B looks up will be described with reference to FIG. 5. FIG. 5 is a diagram that illustrates the relationship between control pressure Pn and command value Qn, which is the contents of the reference table, and corresponds to FIG. 4.

The relationship illustrated in FIG. 5 is different from the relationship illustrated in FIG. 4 in that the lowermost point B, which determines the lower end of each slope line GL, is variable in position, but is the same as the relationship illustrated in FIG. 4 in all other aspects. Therefore, the different parts alone will be described in detail, and description of the common parts will be omitted.

In the example illustrated in FIG. 5, the energy saving control part 30B is structured such that the relationship between control pressure Pn and command value Qn can be controlled by changing the position of the uppermost point A and the position of the lowermost point B vertically, according to the magnitude of the amount of lever operation when a traveling lever is operated in the forward-traveling direction, that is, by changing the maximum command value Qmax and the minimum command value Qmin. Note that, in the example illustrated in FIG. 5, the magnitude of the amount of lever operation when a traveling lever is operated in the forward-traveling direction is the magnitude of forward pilot pressure, which is the pilot pressure when a traveling lever is operated in the forward-traveling direction, and which is detected by the operation sensor 29 that serves as a pressure sensor. However, the magnitude of the amount of lever operation when a traveling lever is operated in the forward-traveling direction may be detected by a device other than a pressure sensor, such as an operation angle sensor, acceleration sensor, angular velocity sensor, resolver, voltmeter, ammeter, and so forth.

To be more specific, the energy saving control part 30B positions the uppermost point A and the lowermost point B in the vertical direction differently when a traveling lever is operated slightly, when a traveling lever is operated in a half-lever operation, and when a traveling lever is operated in a full-lever operation, so that the relationship between control pressure Pn and command value Qn is controlled to suit the condition of the excavator 100 in each case. Note that, in the example illustrated in FIG. 5, for ease of description, the energy saving control part 30B changes the respective positions of the uppermost point A and the lowermost point B in the vertical direction in three steps, that is, when a traveling lever is operated slightly, when a traveling lever is operated in a half-lever operation, and when a traveling lever is operated in full lever operation. However, the energy saving control part 30B may also be structured to change the positions of the uppermost point A and the lowermost point B in four or more steps, depending on forward pilot pressure, or may be structured to change the respective positions of the uppermost point A and the lowermost point B in the vertical direction in a non-step-by-step fashion, depending on forward pilot pressure.

To be more specific, the energy saving control part 30B is structured such that, when a traveling lever is operated slightly, the uppermost point A switches to an uppermost point All (the point used when the maximum command value Qmax is a setting value Qmax11), the lowermost point B switches to a lowermost point B11 (the point used when the minimum command value Qmin is a setting value Qmin11), and the slope line GL switches to a slope line GL11, as shown by the solid line in FIG. 5.

In this case, the flow rate of hydraulic oil that flows into the traveling hydraulic motor 20 is controlled to increase relatively slowly, as the control pressure Pn decreases from the second setting pressure Py to a first setting pressure Px. This allows the operator of the excavator 100 to increase, little by little, the flow rate of hydraulic oil that flows into the traveling hydraulic motor 20 by tilting the traveling lever in the forward-traveling direction little by little. Alternatively, the operator of the excavator 100 can reduce, little by little, the flow rate of hydraulic oil that flows into the traveling hydraulic motor 20 by tilting the traveling lever little by little toward the neutral position. That is, the operator can move the lower traveling body 1 forward, at a low speed, by using control pressures Pn spanning a relatively wide range. As a result of this, the excavator 100 can improve the operability of the lower traveling body 1 when the lower traveling body 1 starts moving and traveling forward at a low speed.

When a half-lever operation is performed later, the energy saving control part 30B repositions the uppermost point A from the uppermost point A11 to an uppermost point A12 and repositions the lowermost point B from the lowermost point B11 to a lowermost point B12, so that the slope line GL becomes a slope line GL12, as shown by the dashed line in FIG. 5. The lowermost point B12 is the point that is used when the control pressure Pn is the second setting pressure Py and the minimum command value Qmin is a setting value Qmin12. Also, when a full-lever operation is performed still later, the energy saving control part 30B repositions the uppermost point A from the uppermost point A12 to an uppermost point A13 and repositions the lowermost point B from the lowermost point B12 to a lowermost point B13, so that the slope line GL becomes a slope line GL13, as shown by the dashed-and-dotted line in FIG. 5. The lowermost point B13 is the point that is used when the control pressure Pn is the second setting pressure Py and the minimum command value Qmin is a setting value Qmin13.

The same applies when the excavator 100 that is moving forward is decelerated or stopped. When a traveling lever's full-lever operation switches to a half-lever operation, the energy saving control part 30B repositions the uppermost point A from the uppermost point A13 to the uppermost point A12 and repositions the lowermost point B from the lowermost point B13 to the lowermost point B12, so that the slope line GL becomes the slope line GL12, as shown by the dashed line in FIG. 5. Also, when the traveling lever's half-lever operation switches to a slight operation still later, the energy saving control part 30B repositions the uppermost point A from the uppermost point A12 to the uppermost point A11 and repositions the lowermost point B from the lowermost point B12 to the lowermost point B11, so that the slope line GL becomes the slope line GL11, as shown by the solid line in FIG. 5.

In this way, the energy saving control part 30B can prevent or substantially prevent a case where the amount of hydraulic oil that flows into the traveling hydraulic motor 20 becomes unstable while the excavator 100 is traveling forward, by repositioning both the uppermost point A and the lowermost point B simultaneously in the vertical direction, as when the uppermost point A alone is repositioned in the vertical direction as illustrated in FIG. 4.

For example, when a traveling lever is operated slightly in the forward-traveling direction, if the slope line GL13 is used as the slope line GL on a fixed basis, the command value Qn would increase at a greater rate than when the slope line GL11 is used as the slope line GL on a fixed basis, and reaches a maximum command value Qmax (setting value Qmax13) that is greater than the maximum command value Qmax (setting value Qmax 11) for the slope line GL11. Because the slope line GL 13 shows a relatively large inclination (rate of increase) like this, the rate of increase in the amount of discharge Q from the main pumps 14 in response to an increase in forward pilot pressure tends to become too large; the operator then may not be able to perform forward-traveling operations in a stable fashion. This is because the excavator 100 rocks back and forth.

On the other hand, if the slope line GL11 is used as the slope line GL that matches the amount of a traveling lever's operation (slight operation) when making the excavator 100 start traveling forward, the upper limit of command values Qn is limited to the setting value Qmax11, which is smaller than the setting value Qmax 13. To be more specific, the rate of increase in the amount of discharge from the main pumps 14 in response to an increase in forward pilot pressure can be made lower than when the slope line GL 13 is the slope line GL. Consequently, the flow rate of hydraulic oil that flows into the traveling hydraulic motor 20 does not become excessively large and is kept at an appropriate flow rate. As a result of this, the rocking of the excavator 100 in the front-back direction when a forward-traveling operation is started is reduced, so that the operator can move the excavator 100 forward smoothly.

In this way, the controller 30 repositions both the uppermost point A and the lowermost point B in the vertical direction by changing the mode of negative control-based flow rate control according to the details of the way the traveling operation device 26D is operated. By doing so, the amount of discharge from the main pumps 14 can be controlled more flexibly than when repositioning the uppermost point A alone. To be more specific, the energy saving control part 30B can adjust the slope line GL according to forward pilot pressure, thereby substantially preventing or preventing cases in which the amount of hydraulic oil to flow into the traveling hydraulic motor 20 becomes unstable. Therefore, the energy saving control part 30B can allow the excavator 100 to move forward smoothly, according to, for example, the details of operations that the operator performs on the traveling operation device 26D.

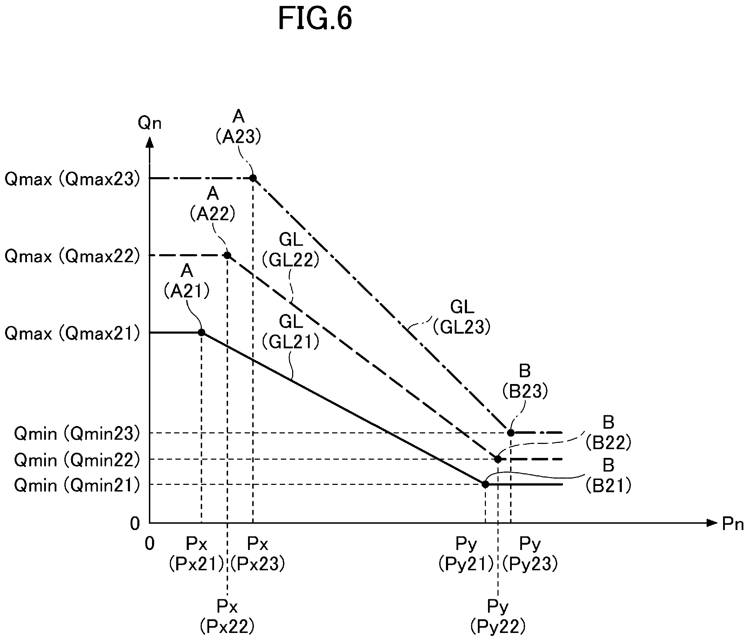

Next, yet another example of the contents of the reference table that the energy saving control part 30B looks up will be described below with reference to FIG. 6. FIG. 6 is a diagram that illustrates the relationship between control pressure Pn and command value Qn, which is the contents of the reference table, and corresponds to both FIG. 4 and FIG. 5.

The relationship illustrated in FIG. 6 is different from the relationship illustrated in FIG. 5 in that the respective positions of the uppermost point A and lowermost point B in the horizontal axis direction are variable, but is the same as the relationship illustrated in FIG. 5 in all other aspects. Therefore, the different parts alone will be described in detail, and description of the common parts will be omitted.

In the example illustrated in FIG. 6, the energy saving control part 30B is structured such that the relationship between control pressure Pn and command value Qn can be controlled by changing the respective positions of the uppermost point A and the lowermost point B in the vertical direction and in the horizontal direction, depending on the magnitude of the amount of lever operation when a traveling lever is operated in the forward-traveling direction, that is, by changing all of the maximum command value Qmax, minimum command value Qmin, first setting pressure Px, and second setting pressure Py. Note that, in the example illustrated in FIG. 6, the magnitude of the amount of lever operation when a traveling lever is operated in the forward-traveling direction is the magnitude of forward pilot pressure, which is the pilot pressure when a traveling lever is operated in the forward-traveling direction, and which is detected by the operation sensor 29 that serves as a pressure sensor. However, the magnitude of the amount of lever operation when a traveling lever is operated in the forward-traveling direction may be detected by a device other than a pressure sensor, such as an operation angle sensor, acceleration sensor, angular velocity sensor, resolver, voltmeter, ammeter, and so forth.

To be more specific, the energy saving control part 30B moves the respective positions of the uppermost point A and the lowermost point B in the vertical and horizontal directions when a traveling lever is operated slightly, when a traveling lever is operated in a half-lever operation, and when a traveling lever is operated in a full-lever operation, so that the relationship between control pressure Pn and command value Qn is controlled to suit the condition of the excavator 100 in each case. Note that, in the example illustrated in FIG. 6, for ease of description, the energy saving control part 30B changes the respective positions of the uppermost point A and the lowermost point B in the vertical direction and in the horizontal direction in three steps, that is, when a traveling lever is operated slightly, when a traveling lever is operated in a half-lever operation, and when a traveling lever is operated in full lever operation. However, the energy saving control part 30B may also be structured to change the respective positions of the uppermost point A and the lowermost point B in the vertical direction and in the horizontal direction in four or more steps, depending on forward pilot pressure, or may be structured to change the respective positions of the uppermost point A and the lowermost point B in the vertical direction and in the horizontal direction in a non-step-by-step fashion, depending on forward pilot pressure.

To be more specific, the energy saving control part 30B is structured such that, when a traveling lever is operated slightly, the uppermost point A switches to an uppermost point A21 (the point used when the first setting pressure Px is a setting value Px21 and the maximum command value Qmax is a setting value Qmax21), the lowermost point B switches to a lowermost point B21 (the point used when the second setting pressure Py is a setting value Py21 and the minimum command value Qmin is a setting value Qmin21), and the slope line GL switches to a slope line GL21, as shown by the solid line in FIG. 6.

In this case, the flow rate of hydraulic oil that flows into the traveling hydraulic motor 20 is controlled to increase relatively slowly, as the control pressure Pn decreases from the setting value Py21 to a setting value Px21. This allows the operator of the excavator 100 to increase, little by little, the flow rate of hydraulic oil that flows into the traveling hydraulic motor 20 by tilting the traveling lever in the forward-traveling direction little by little. Alternatively, the operator of the excavator 100 can reduce, little by little, the flow rate of hydraulic oil that flows into the traveling hydraulic motor 20 by tilting the traveling lever little by little toward the neutral position. That is, the operator can move the lower traveling body 1 forward, at a low speed, by using control pressures Pn spanning a relatively wide range. As a result of this, the excavator 100 can improve the operability of the lower traveling body 1 when the lower traveling body 1 starts moving and traveling forward at a low speed.

When a half-lever operation is performed later, the energy saving control part 30B repositions the uppermost point A from the uppermost point A11 to an uppermost point A22 and repositions the lowermost point B from the lowermost point B11 to a lowermost point B22, so that the slope line GL becomes a slope line GL22, as shown by the dashed line in FIG. 6. The uppermost point A22 is the point that is used when the first setting pressure Px is a setting value Px22 and the maximum command value Qmax is a setting value Qmax22. Also, the lowermost point B22 is the point that is used when the second setting pressure Py is a setting value Py22 and the minimum command value Qmin is a setting value Qmin22. Also, when a full-lever operation is performed still later, the energy saving control part 30B repositions the uppermost point A from the uppermost point A22 to an uppermost point A23 and repositions the lowermost point B from the lowermost point B22 to a lowermost point B23, so that the slope line GL becomes a slope line GL22, as shown by the dashed-and-dotted line in FIG. 6. The uppermost point A23 is the point that is used when the first setting pressure Px is a setting value Px23 and the maximum command value Qmax is a setting value Qmax23. The lowermost point B23 is the point that is used when the second setting pressure Py is a setting value Py23 and the minimum command value Qmin is a setting value Qmin23.

The same applies when the excavator 100 that is moving forward is decelerated or stopped. When a traveling lever's full-lever operation switches to a half-lever operation, the energy saving control part 30B repositions the uppermost point A from the uppermost point A23 to the uppermost point A22 and repositions the lowermost point B from the lowermost point B23 to the lowermost point B22, so that the slope line GL becomes the slope line GL22, as shown by the dashed line in FIG. 6. Also, when the traveling lever's half-lever operation switches to a slight operation still later, the energy saving control part 30B repositions the uppermost point A from the uppermost point A22 to the uppermost point A21 and repositions the lowermost point B from the lowermost point B22 to the lowermost point B21, so that the slope line GL becomes the slope line GL21, as shown by the solid line in FIG. 6.

In this way, the energy saving control part 30B can prevent or substantially prevent a case where the amount of hydraulic oil that flows into the traveling hydraulic motor 20 becomes unstable while the excavator 100 is traveling forward, by repositioning both the uppermost point A and the lowermost point B simultaneously in the vertical direction and in the horizontal direction, as when repositioning both the uppermost point A and the lowermost point B simultaneously in the vertical direction alone.

For example, when a traveling lever is operated slightly in the forward-traveling direction, if the slope line GL23 is used as the slope line GL on a fixed basis, the command value Qn would increase at a greater rate than when the slope line GL21 is used as the slope line GL on a fixed basis, and reaches a maximum command value Qmax (setting value Qmax23) that is greater than the maximum command value Qmax (setting value Qmax 21) for the slope line GL21. Because the slope line GL 23 shows a relatively large inclination (rate of increase) like this, the rate of increase in the amount of discharge Q from the main pumps 14 in response to an increase in forward pilot pressure tends to become too large, and the flow rate of hydraulic oil that flows into the traveling hydraulic motor 20 may also become excessively large.

On the other hand, when the slope line GL21 is used as the slope line GL, the flow rate of hydraulic oil that flows into the traveling hydraulic motor 20 does not become excessively large and is kept at an appropriate flow rate.

In this way, the controller 30 repositions both the uppermost point A and the lowermost point B in the vertical direction and in the horizontal direction, by changing the mode of negative control-based flow rate control according to the details of the way the traveling operation device 26D is operated. By doing so, the amount of discharge from the main pumps 14 can be controlled more flexibly than when repositioning both the uppermost point A and the lowermost position B in the vertical direction alone. To be more specific, the energy saving control part 30B can adjust the slope line GL according to forward pilot pressure, thereby substantially preventing or preventing cases in which the amount of hydraulic oil to flow into the traveling hydraulic motor 20 becomes unstable. Therefore, the energy saving control part 30B can allow the excavator 100 to move forward smoothly, according to, for example, the details of operations that the operator performs on the traveling operation device 26D.

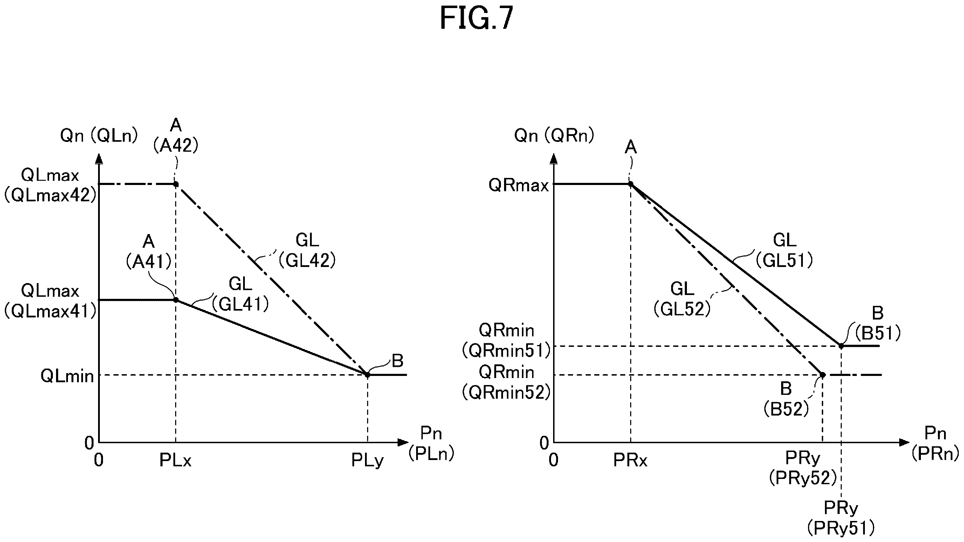

Next, yet another example of the contents of the reference table that the energy saving control part 30B looks up will be described below with reference to FIG. 7. FIG. 7 is a diagram that illustrates the relationship between control pressure Pn and command value Qn, which is the contents of the reference table, and corresponds to all of FIG. 4 to FIG. 6.

To be more specific, the left diagram of FIG. 7 illustrates the relationship between control pressure PLn and command value QLn. The control pressure PLn is the pressure of hydraulic oil in the left center bypass oil line 40L, detected by the left control pressure sensor 19L, and the command value QLn is the command value for the amount of discharge from the left main pump 14L. Also, the right diagram of FIG. 7 illustrates the relationship between control pressure PRn and command value QRn. The control pressure PRn is the pressure of hydraulic oil in the right center bypass oil line 40R, detected by the right control pressure sensor 19R, and the command value QRn is the command value for the amount of discharge from the right main pump 14R.

FIG. 7 shows the contents of reference tables that are used when the excavator 100 travels to the left front on a curve. To be more specific, the left diagram of FIG. 7 shows the contents of the reference table that is used when the left traveling lever is operated slightly in the forward-traveling direction, and the right diagram in FIG. 7 shows the contents of the reference table that is used when the right traveling lever is operated in the forward-traveling direction in a greater amount of lever operation than the left traveling lever. Note that the following description with reference to the right diagram of FIG. 7 applies when the right traveling lever is operated in the forward-traveling direction in a full-lever operation. However, the following description may apply likewise when the right traveling lever is operated in the forward-traveling direction in a half-lever operation or in a slight operation, as long as the right traveling lever is operated in a greater amount of lever operation than the left traveling lever.

Also, although the following description with reference to FIG. 7 applies when the excavator 100 travels to the left front on a curve, the same applies when the excavator 100 travels to the front right, rear left, or rear right, on a curve.

The left diagram in FIG. 7 shows, by the solid line (the polyline including a slope line GL41), the relationship between control pressure PLn and command value QLn in the left main pump 14L when the left traveling lever is operated slightly in the forward-traveling direction for a left front curved traveling operation, which is a traveling operation to make the excavator 100 travel to the left front on a curve. Also, the left diagram of FIG. 7 shows, by the dashed-and-dotted line (the polyline including a slope line GL42), the relationship between control pressure PLn and command value QLn in the light main pump 14 for comparison when the traveling left lever is operated in the forward traveling direction in a full-lever operation for a straight traveling operation, which is a traveling operation to make the excavator 100 travel straight. Note that the polyline including the slope line GL42 corresponds to the polyline including the slope line GL3 in FIG. 4.

A straight traveling operation is a traveling operation to make the excavator 100 travel straight, and is a composite operation by the left traveling operation device and the right traveling operation device, in which the direction and amount of operation of the left traveling operation device and the direction and amount of operation of the right traveling operation device are the same. Traveling operations are implemented by using the traveling operation device 26D. Note that a case in which the difference between the amount of operation on the left traveling operation device and the amount of operation on the right traveling operation device is less than a predetermined value may be one example of when the amount of operation on the left traveling operation device and the amount of operation on the right traveling operation device are the same.

Curved traveling operations, which refer to traveling operations to make the excavator 100 travel on a curve, are different from straight traveling operations, and are also referred to as "steering operations." To be more specific, curved traveling operations at least include a left front curved traveling operation to make the excavator 100 travel to the left front on a curve, a right front curved traveling operation to make the excavator 100 travel to the right front on a curve, a left back curved traveling operation to make the excavator 100 travel to the left rear on a curve, and a right back curved traveling operation to make the excavator 100 travel to the right rear on a curve. To be more specific, the left front curved traveling operation above refers to a composite operation by the left traveling operation device and the right traveling operation device, implemented when the left traveling operation device and the right traveling operation device are both operated in the forward-traveling direction and the amount of operation on the left traveling operation device is smaller than the amount of operation on the right traveling operation device. Likewise, the right front curved traveling operation refers to a composite operation by the left traveling operation device and the right traveling operation device, implemented when the left traveling operation device and the right traveling operation device are both operated in the forward-traveling direction and the amount of operation on the right traveling operation device is smaller than the amount of operation on the left traveling operation device. The left back curved traveling operation refers to a composite operation by the left traveling operation device and the right traveling operation device, implemented when the left traveling operation device and the right traveling operation device are both operated in the backward-traveling direction and the amount of operation on the left traveling operation device is smaller than the amount of operation on the right traveling operation device. The right back curved traveling operation refers to a composite operation by the left traveling operation device and the right traveling operation device, implemented when the left traveling operation device and the right traveling operation device are both operated in the backward-traveling direction and the amount of operation on the right traveling operation device is smaller than the amount of operation on the left traveling operation device.

The controller 30 can determine whether or not a straight traveling operation is being performed, or whether or not a curved traveling operation is being performed, based on an output of the operation sensor for detecting the details of the way the left traveling operation device is operated and an output of the operation sensor for detecting the details of the way the right traveling operation device is operated.

The solid line (the polyline including a slope line GL51) in the right diagram of FIG. 7 shows the relationship between control pressure PRn and command value QRn in the right main pump 14R when the right traveling lever is operated in the forward-traveling direction, in a full-lever operation, for a left front curved traveling operation. Also, the dashed-and-dotted line (the polyline including a slope line GL42) in the left diagram of FIG. 7 shows the relationship between control pressure PLn and command value QLn in the right main pump 14R when the right traveling lever is operated in the forward-traveling direction, in a full-lever operation, for a straight traveling operation. Note that the polyline including the slope line GL42 corresponds to the polyline including the slope line GL42 in the left diagram of FIG. 4, that is, the polyline including the slope line GL3 in FIG. 4.

In the example in the left diagram of FIG. 7, the energy saving control part 30B is structured such that the energy saving control part 30B can control the relationship between control pressure PLn and command value QLn, with respect to an inner main pump (in this example, the left main pump 14L) that supplies hydraulic oil to an inner traveling hydraulic motor (in this example, the left traveling hydraulic motor 20L) that drives an inner crawler (in this example, the left crawler) located on the inner side on a curve, by changing the position of the uppermost point A vertically, that is, by changing the maximum command value QLmax. Also, the energy saving control part 30B is structured such that the energy saving control part 30B can control the relationship between control pressure PRn and command value QRn with respect to an outer main pump (in this example, the right main pump 14R) that supplies hydraulic oil to an outer traveling hydraulic motor (in this example, the right traveling hydraulic motor 20R) that drives an outer crawler (in this example, the right crawler) located on the outer side on a curve, by changing the position of the lowermost point B both vertically and horizontally, that is, by changing the minimum command value QRmin and the second setting pressure PRy.

To be more specific, the energy saving control part 30B is structured such that, when the left traveling lever is operated slightly in the forward-traveling direction for a left front curved traveling operation, the uppermost point A switches to an uppermost point A41 (the point used when the maximum command value QLmax is a setting value QLmax41) and the slope line GL switches to a slope line GL41, as shown by the solid line in the left diagram of FIG. 7.

In this case, the flow rate of hydraulic oil that flows into the left traveling hydraulic motor 20L is controlled so as to increase relatively slowly as the control pressure PLn decreases from a second setting pressure PLy to a first setting pressure PLx. This allows the operator of the excavator 100 to increase, little by little, the flow rate of hydraulic oil that flows into the left traveling hydraulic motor 20L by tilting the left traveling lever in the forward-traveling direction little by little. Alternatively, the operator of the excavator 100 can reduce, little by little, the flow rate of hydraulic oil that flows into the left traveling hydraulic motor 20L by tilting the left traveling lever toward the neutral position little by little. That is, the operator can make the left crawler move forward, at a low speed, by using control pressures PLn spanning a relatively wide range. As a result of this, the excavator 100 can improve the operability of the left crawler when the left crawler moves forward at a low speed.

Also, when the right traveling lever is operated in the forward-traveling direction, in a full-lever operation, for a left front curved traveling operation, the energy saving control part 30B repositions the lowermost point B to a lowermost point B51 such that the slope line GL switches to a slope line GL51. The lowermost point B51 is the point that is used when the control pressure PRn is a setting value PRy51 and the minimum command value QRmin is a setting value QRmin51.

The slope line GL51 is set at a higher position than a slope line GL52, which is used when the right traveling lever is operated in the forward-traveling direction, in a full-lever operation, for a straight traveling operation. To be more specific, the lowermost point B51 of the slope line GL51 is set to the upper right of the lowermost point B52 of the slope line GL52. The lowermost point B52 is the point that is used when the control pressure PRn is a setting value PRy52 and the minimum command value QRmin is a setting value QRmin52.

In this case, if the control pressure PRn is greater than the first setting pressure PRx, the flow rate of hydraulic oil that flows into the right traveling hydraulic motor 20R increases compared to when the right traveling lever is operated in the forward-traveling direction, in a full-lever operation, for a straight traveling operation. This allows the operator of the excavator 100 to maintain the flow rate of hydraulic oil that flows into the right traveling hydraulic motor 20R at a relatively high level. Consequently, the operator can stabilize the movement of the right crawler.

In this way, the controller 30 can improve the operability of the left crawler when the left crawler starts moving in response to the left operation lever being operated slightly for a left front curved traveling operation, and, furthermore, stabilize the movement of the right crawler when the right traveling lever is operated in a greater amount of lever operation than the left traveling lever for a left front curved traveling operation. As a result of this, the controller 30 can enhance the steering operability of the excavator 100.

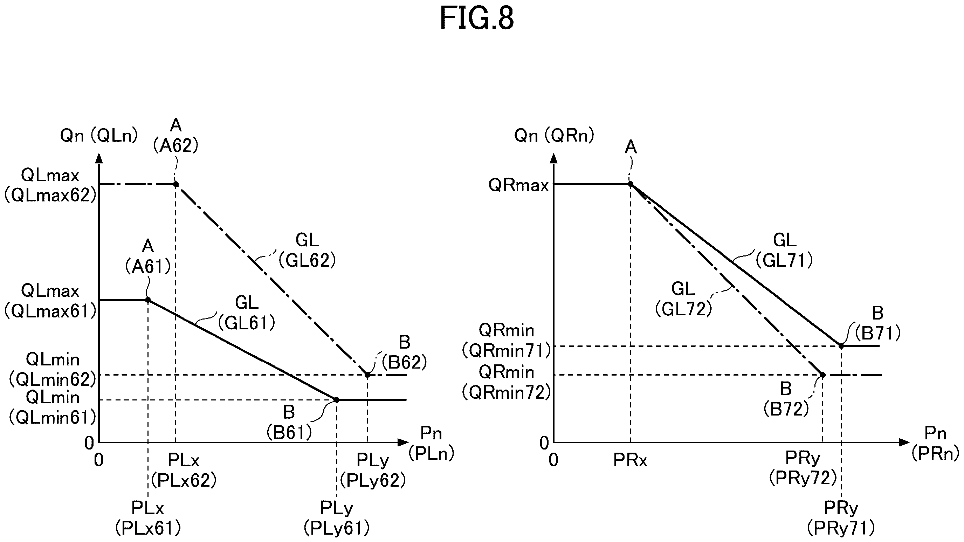

Next, yet another example of the contents of the reference table that the energy saving control part 30B looks up will be described below with reference to FIG. 8. FIG. 8 is a diagram that illustrates the relationship between control pressure Pn and command value Qn, which is the contents of the reference table, and corresponds to FIG. 7.

To be more specific, the left diagram of FIG. 8 illustrates the relationship between control pressure PLn and command value QLn. The control pressure PLn is the pressure of hydraulic oil in the left center bypass oil line 40L, detected by the left control pressure sensor 19L, and the command value QLn is the command value for the amount of discharge from the left main pump 14L. Also, the right diagram of FIG. 8 illustrates the relationship between control pressure PRn and command value QRn. The control pressure PRn is the pressure of hydraulic oil in the right center bypass oil line 40R, detected by the right control pressure sensor 19R, and the command value QRn is the command value for the amount of discharge from the right main pump 14R.

FIG. 8 shows the contents of reference tables that are used when the excavator 100 travels to the left front on a curve. To be more specific, the left diagram of FIG. 8 shows the contents of the reference table that is used when the left traveling lever is operated slightly in the forward-traveling direction, and the right diagram in FIG. 8 shows the contents of the reference table that is used when the right traveling lever is operated in the forward-traveling direction in a greater amount of lever operation than the left traveling lever. Note that the following description with reference to the right diagram of FIG. 8 applies when the right traveling lever is operated in the forward-traveling direction in a full-lever operation. However, the following description may apply likewise when the right traveling lever is operated in the forward-traveling direction in a half-lever operation or in a slight operation, as long as the right traveling lever is operated in a greater amount of lever operation than the left traveling lever.

Also, although the following description with reference to FIG. 8 applies when the excavator 100 travels to the left front on a curve, the same applies when the excavator 100 travels to the front right, rear left, or rear right, on a curve.

The left diagram in FIG. 8 shows, by the solid line (the polyline including a slope line GL61), the relationship between control pressure PLn and command value QLn in the left main pump 14L when the left traveling lever is operated slightly in the forward-traveling direction for a left front curved traveling operation. Also, the left diagram of FIG. 8 shows, by the dashed-and-dotted line (the polyline including a slope line GL62), the relationship between control pressure PLn and command value QLn in the left main pump 14L when the left traveling lever is operated in the forward traveling direction in a full-lever operation for a straight traveling operation. Note that the polyline including the slope line GL62 corresponds to the polyline including the slope line GL3 in FIG. 4.

The right diagram in FIG. 8 shows, by the solid line (the polyline including a slope line GL71), the relationship between control pressure PRn and command value QRn in the right main pump 14R when the right traveling lever is operated in the forward-traveling direction in a full-lever operation for a left front curved traveling operation. Also, the right diagram of FIG. 8 shows, by the dashed-and-dotted line (the polyline including a slope line GL72), the relationship between control pressure PLn and command value QLn in the right main pump 14R when the right traveling lever is operated in the forward-traveling direction in a full-lever operation for a straight traveling operation. Note that, the polyline including the slope line GL71 is the same as the polyline including the slope line GL51 in FIG. 7. The polyline including the slope line GL72 corresponds to the polyline including the slope line GL62 in the left diagram of FIG. 8, that is, the polyline including the slope line GL3 in FIG. 4.

In the example shown in the left diagram of FIG. 8, the energy saving control part 30B is structured such that the energy saving control part 30B can control the relationship between control pressure PLn and command value QLn, with respect to an inner main pump (in this example, the left main pump 14L) that supplies hydraulic oil to an inner traveling hydraulic motor (in this example, the left traveling hydraulic motor 20L) that drives an inner crawler (in this example, the left crawler) located on the inner side on a curve, by changing the respective positions of the uppermost point A and the lowermost point B both vertically and horizontally, that is, by changing the maximum command value QLmax, first setting pressure PLx, minimum command value QLmin, and second setting pressure PLy. Also, the energy saving control part 30B is structured such that the energy saving control part 30B can control the relationship between control pressure PRn and command value QRn with respect to an outer main pump (in this example, the right main pump 14R) that supplies hydraulic oil to an outer traveling hydraulic motor (in this example, the right traveling hydraulic motor 20R) that drives an outer crawler (in this example, the right crawler) located on the outer side on a curve, by changing the position of the lowermost point B both vertically and horizontally, that is, by changing the minimum command value QRmin and the second setting pressure PRy.

To be more specific, the energy saving control part 30B is structured such that, when the left traveling lever is operated slightly in the forward-traveling direction for a left front curved traveling operation, the uppermost point A switches to an uppermost point A61 (the point used when the maximum command value QLmax is a setting value QLmax61) and the slope line GL switches to a slope line GL61, as shown by the solid line in the left diagram of FIG. 8.

In this case, the flow rate of hydraulic oil that flows into the left traveling hydraulic motor 20L is controlled so as to increase relatively slowly as the control pressure PLn decreases from a setting value PLy61 to a setting value PLx61. This allows the operator of the excavator 100 to increase, little by little, the flow rate of hydraulic oil that flows into the left traveling hydraulic motor 20L by tilting the left traveling lever in the forward-traveling direction little by little. Alternatively, the operator of the excavator 100 can reduce, little by little, the flow rate of hydraulic oil that flows into the left traveling hydraulic motor 20L by tilting the left traveling lever toward the neutral position little by little. That is, the operator can make the left crawler move forward, at a low speed, by using control pressures PLn spanning a relatively wide range. As a result of this, the excavator 100 can improve the operability of the left crawler when the left crawler moves forward at a low speed.

Also, when the right traveling lever is operated in the forward-traveling direction, in a full-lever operation, for a left front curved traveling operation, the energy saving control part 30B repositions the lowermost point B to a lowermost point B71 such that the slope line GL switches to a slope line GL71. The lowermost point B71 is the point that is used when the control pressure PRn is a setting value PRy71 and the minimum command value QRmin is a setting value QRmin71.

The slope line GL71 is set at a higher position than a slope line GL72, which is used when the right traveling lever is operated in the forward-traveling direction, in a full-lever operation, for a straight traveling operation. To be more specific, the lowermost point B71 of the slope line GL71 is set to the upper right of the lowermost point B72 of the slope line GL72. The lowermost point B72 is the point that is used when the control pressure PRn is a setting value PRy72 and the minimum command value QRmin is a setting value QRmin72.

In this case, if the control pressure PRn is greater than the first setting pressure PRx, the flow rate of hydraulic oil that flows into the right traveling hydraulic motor 20R increases compared to when the right traveling lever is operated in the forward-traveling direction, in a full-lever operation, for a straight traveling operation. This allows the operator of the excavator 100 to maintain the flow rate of hydraulic oil that flows into the right traveling hydraulic motor 20R at a relatively high level. Consequently, the operator can stabilize the movement of the right crawler.

Note that, in the examples illustrated in FIG. 7 and FIG. 8, the controller 30 is structured to control both the relationship between control pressure Pn and command value Qn in the inner main pump and the relationship between control pressure Pn and command value Qn in the outer main pump, when a curved traveling operation is performed. However, the controller 30 may also be structured so as to control only the relationship between control pressure Pn and command value Qn in the inner main pump, and not control the relationship between control pressure Pn and command value Qn in the outer main pump, when a curved traveling operation is performed. In this case, the relationship between control pressure Pn and command value Qn in the outer main pump may be, for example, the relationship represented by the slope line GL that is used when the lever is operated in a full-lever operation for a straight traveling operation (see the slope line GL3 in FIG. 4).

Also, in the examples illustrated in FIG. 7 and FIG. 8, the controller 30 is structured to change the mode of negative control-based flow rate control for the left main pump 14L according to the amount of operation on the left traveling operation device, and change the mode of negative control-based flow rate control for the right main pump 14R according to the amount of operation on the right traveling operation device. However, the controller 30 may also be structured to change the mode of negative control-based flow rate control for both the left main pump 14L and the right main pump 14R by taking into account the difference between the amount of operation on the left traveling operation device and the amount of operation on the right traveling operation device (that is, the difference in the amount of operation). The difference in the amount of operation may be detected as a difference in pilot pressure, for example. In that case, for example, the lowermost point B51 in the right diagram of FIG. 7 may be set such that, the greater the difference in pilot pressure, the greater the distance between the lowermost point B51 and the lowermost point B52. That is, the lowermost point B51 may be set such that, the greater the difference in pilot pressure, the greater the setting value QRmin51 and the setting value PRy51. Also, the uppermost point A41 in the left diagram of FIG. 7 may be set such that, the greater the difference in pilot pressure, the greater the distance between the uppermost point B41 and the uppermost point B42. That is, the uppermost point A41 may be set such that, the larger the difference in pilot pressure, the smaller the setting value QLmax41.

Also, travel assist control, in which the mode of negative control-based flow rate control is changed depending on the details of the way the traveling operation device 26D is operated, may be cancelled when an operation other than a traveling operation is performed, such as when an operation related to an upper actuator is performed. That is, travel assist control may be canceled when a traveling operation and an operation other than a traveling operation, such as an upper actuator operation, are performed at the same time. An upper actuator operation in the illustrated example is an operation for making upper actuators work. The upper actuators include the boom cylinder 7, arm cylinder 8, a bucket cylinder 9, and a rotation hydraulic motor 21. Note that the rotation hydraulic motor 21 may be excluded from the upper actuators. In the event travel assist control is canceled, the controller 30 may employ the relationship between control pressure Pn and command value Qn that is represented by the slope line GL when a lever is operated in a full-lever operation for a straight traveling operation, for example (see the slope line GL3 in FIG. 4). This is to prevent or substantially prevent the amount of hydraulic oil to be supplied to the traveling hydraulic motor 20 and to the upper actuators from varying and making the movement of the excavator 100 awkward.

As described above, as illustrated in FIG. 1 and FIG. 2, the excavator 100 according to the embodiment of the present invention includes: a lower traveling body 1; an upper rotating body 3 that is mounted on the lower traveling body 1; an engine 11, which is an example of a source of drive mounted in the upper rotating body 3; main pumps 14 that serve as hydraulic pumps driven by the engine 11; an operation device 26; and a controller 30 that serves as a control device. The controller 30 is structured to control the flow rate of the main pumps 14 based on low-load work characteristic, and changes the low-load work characteristic according to the details of operations performed on the operation device 26. In this negative control-based hydraulic system, the main pumps 14 discharge hydraulic oil, and the portion of the hydraulic oil that does not flow into the hydraulic actuators, which allow each part of the excavator 100 to move, is sent to hydraulic oil tanks through the apertures 18 formed on the center bypass oil lines 40. The amount of discharge from the main pumps 14 is controlled according to control pressure (negative control pressure), which is the pressure of hydraulic oil upstream of the apertures 18. This control pressure increases as the flow rate of hydraulic oil that passes through the apertures 18 increases. When a hydraulic actuator is operated, hydraulic oil flows into the hydraulic actuator at an increased flow rate, and therefore the flow rate of hydraulic oil to pass through the apertures 18 decreases in turn, causing a drop in control pressure. The main pumps 14 are therefore controlled such that the amount of discharge increases as the control pressure decreases. This is to allow a sufficient amount of hydraulic oil to flow into hydraulic actuators while they are operated. On the other hand, the main pumps 14 are controlled such that the amount of discharge decreases as the control pressure increases. This is to prevent wasteful discharge of hydraulic oil when no hydraulic actuator is being operated. Also, the amount of discharge from the main pumps 14 is controlled by way of power control as well. Power control refers to a function to adjust the amount of discharge from the main pumps 14 such that the suction power, which is represented by the product of the amount of discharge and discharge pressure of the main pumps 14, is less than the output power of the engine 11 serving as a source of drive.

The mode of negative control-based flow rate control may be determined by, for example, a slope line GL (see FIG. 4) that represents the relationship between control pressure Pn, which is the pressure of hydraulic oil upstream of the apertures 18 formed on center bypass oil lines 40 (see FIG. 2), and the command value Qn for the amount of discharge from the main pumps 14. Then, at least one of the uppermost point A and the lowermost point B of the slope line GL may be variable in position.

The main pumps 14 may include a left main pump 14L and a right main pump 14R, as illustrated in FIG. 2. Also, the traveling hydraulic motors 20 may include a left traveling hydraulic motor 20L, which is driven by the hydraulic oil discharged from the left main pump 14L, and a right traveling hydraulic motor 20R, which is driven by the hydraulic oil discharged from the right main pump 14R. In this case, the traveling operation device 26D may include a left traveling operation device for operating the left traveling hydraulic motor 20L and a right traveling operation device for operating the right traveling hydraulic motor 20R. The controller 30 may be structured to change the mode of negative control-based flow rate control for the left main pump 14L according to the details of operations performed on the left traveling operation device, and change the mode of negative control-based flow rate control for the left main pump 14L according to the details of operations performed on the right traveling operation device.

The controller 30 may also be structured to make the mode of negative control-based flow rate control for the left main pump 14L and the mode of negative control-based flow rate control for the right main pump 14R the same while the excavator 100 travels straight.

Also, the controller 30 may be structured to make the mode of negative control-based flow rate control for the left main pump 14L and the mode of negative control-based flow rate control for the right main pump 14R different while the excavator 100 travels on a curve.

Structured as described above, the controller 30 can control the amount of discharge Q from the main pumps 14 more flexibly. To be more specific, the amount of discharge (displacement volume) from each of the left main pump 14L and the right main pump 14R can be controlled more flexibly. Consequently, the controller 30 can enhance the traveling operability and steering operability of the excavator 100.

A preferred embodiment of the present invention has been described above. However, the present invention is by no means limited to the embodiment described herein. Various changes and alterations may be applied to the embodiment described herein without departing from the scope of the present invention. Also, a variety of features of the embodiment described herein may be combined as appropriate as long as such combinations show no technical inconsistencies.

For example, according to the embodiment described above, the slope line GL is a straight line that connects the uppermost point A and the lowermost point B. However, the slope line GL may also be a polyline that has two or more bending points and connects the uppermost point A and the lowermost point B, a curve that connects the uppermost point A and lowermost point B, or a combination of straight lines and curves connecting the uppermost point A and the lowermost point B.

Although, according to the above embodiment, the energy saving control part 30B is structured to define the slope line GL by determining the position of the uppermost point A and the position of the lowermost point B, the energy saving control part 30B may also be structured to define the slope line GL by determining one or more other points, or define (specify) the slope line GL by determining the slope angle of the slope line GL.

Also, according to the above embodiment, the energy saving control part 30B is structured to change the position of at least one of the uppermost point A and the lowermost point B based on the pilot pressure detected by the operation sensor 29. However, the energy saving control part 30B may also be structured to change the position of at least one of the uppermost point A and the lowermost point B based on the pilot pressure detected by the operation sensor 29 and the value of back pressure detected by a back pressure sensor that detects back pressure. The back pressure sensor detects, for example, the pressure of hydraulic oil in parts of the center bypass oil lines 40 downstream of the apertures 18, that is, parts of the oil lines 40 between the apertures 18 and the oil line 43, as back pressure. The energy saving control part 30B may reposition the uppermost point A based on values detected by the back pressure sensor such that the setting value of control pressure Pn corresponding to the uppermost point A is higher than the back pressure.

This application is based on and claims priority to Japanese Patent Application No. 2021-178372, filed October 29, 2021, the entire contents of which are incorporated herein by reference.

### Reference Signs List

- 1: lower traveling body
- 2: rotating mechanism
- 3: upper rotating body
- 4: boom
- 5: arm
- 6: bucket
- 7: boom cylinder
- 8: arm cylinder
- 9: bucket cylinder
- 10: cabin
- 11: engine
- 13: pump regulator
- 14: main pump
- 15: pilot pump
- 17: control valve unit
- 18: aperture
- 19: control pressure sensor
- 20: traveling hydraulic motor
- 20L: left traveling hydraulic motor
- 20R: right traveling hydraulic motor
- 21: rotating hydraulic motor
- 21P: oil line
- 22: relief valve
- 23: check valve
- 26: operation device
- 26D: traveling operation device
- 27: temperature sensor
- 28: discharge pressure sensor
- 29: operation sensor
- 30: controller
- 30A: power control part
- 30B: energy saving control part
- 30C: minimum value selection part
- 30D: maximum value setting part
- 30E: current command output part
- 40: center bypass oil line
- 41: return oil line
- 42: parallel oil line
- 43-46: oil line
- 45a, 45b: oil line part
- 50: check valve
- 51: oil cooler
- 52: check valve
- 53: filter
- 170-176: control valve

## Claims

1. An excavator comprising:
a lower traveling body;
an upper rotating body mounted on the lower traveling body;
a drive source mounted in the upper rotating body;
a hydraulic pump driven by the drive source;
an operation device; and
a control device,
wherein the control device controls a flow rate of the hydraulic pump based on a low-load work characteristic, and changes the low-load work characteristic according to details of an operation performed on the operation device.

2. The excavator according to claim 1,
wherein the low-load work characteristic is determined by a slope line that represents a relationship between a control pressure, which is a pressure of hydraulic oil upstream of an aperture formed on a center bypass oil line, and a command value for an amount of discharge from the hydraulic pump, and
wherein at least one of an uppermost point and a lowermost point of the slope line is variable in position.

3. The excavator according to claim 1, further comprising a traveling hydraulic motor,
wherein the operation device includes a traveling operation device configured to operate the traveling hydraulic motor,
wherein the hydraulic pump includes a left main pump and a right main pump,
wherein the traveling hydraulic motor includes a left traveling hydraulic motor driven by hydraulic oil discharged from the left main pump, and a right traveling hydraulic motor driven by the hydraulic oil discharged from the right main pump,
wherein the traveling operation device includes a left traveling operation device configured to operate the left traveling hydraulic motor and a right traveling operation device configured to operate the right traveling hydraulic motor, and
wherein the control device changes the flow rate of the left main pump according to the details of the operation performed on the left traveling operation device, and changes the flow rate of the right main pump according to the details of the operation performed on the right traveling operation device.

4. The excavator according to claim 3,
wherein the control device makes the low-load work characteristic same between the left main pump and the right main pump while the excavator travels straight.

5. The excavator according to claim 3,
wherein the control device makes the low-load work characteristic different between the left main pump and the right main pump while the excavator travels on a curve.

## Amended claims

### Amended claims under Art. 19.1 PCT

1. An excavator comprising:
a lower traveling body;
an upper rotating body mounted on the lower traveling body;
a drive source mounted in the upper rotating body;
a hydraulic pump driven by the drive source;
an operation device; and
a control device,
wherein the control device controls a flow rate of the hydraulic pump based on a low-load work characteristic, and changes the low-load work characteristic according to details of an operation performed on the operation device.

2. The excavator according to claim 1,
wherein the low-load work characteristic is determined by a slope line that represents a relationship between a control pressure, which is a pressure of hydraulic oil upstream of an aperture formed on a center bypass oil line, and a command value for an amount of discharge from the hydraulic pump, and
wherein at least one of an uppermost point and a lowermost point of the slope line is variable in position.

3. The excavator according to claim 1, further comprising a traveling hydraulic motor,
wherein the operation device includes a traveling operation device configured to operate the traveling hydraulic motor,
wherein the hydraulic pump includes a left main pump and a right main pump,
wherein the traveling hydraulic motor includes a left traveling hydraulic motor driven by hydraulic oil discharged from the left main pump, and a right traveling hydraulic motor driven by the hydraulic oil discharged from the right main pump,
wherein the traveling operation device includes a left traveling operation device configured to operate the left traveling hydraulic motor and a right traveling operation device configured to operate the right traveling hydraulic motor, and
wherein the control device changes the flow rate of the left main pump according to the details of the operation performed on the left traveling operation device, and changes the flow rate of the right main pump according to the details of the operation performed on the right traveling operation device.

4. The excavator according to claim 3,
wherein the control device makes the low-load work characteristic same between the left main pump and the right main pump while the excavator travels straight.

5. The excavator according to claim 3,
wherein the control device makes the low-load work characteristic different between the left main pump and the right main pump while the excavator travels on a curve.

6. (Added) The excavator according to claim 3, wherein the control device makes the low-load work characteristic for the right main pump different when a full-lever operation is performed on the right traveling operation device while the excavator travels to left on a curve versus when the full-lever operation is performed on the right traveling operation device while the excavator travels straight.

7. (Added) The excavator according to claim 3,
wherein the low-load work characteristic is determined by a slope line that represents a relationship between a control pressure, which is a pressure of the hydraulic oil upstream of an aperture formed on a center bypass oil line, and a command value for an amount of discharge from the hydraulic pump, and
wherein the control device makes a position of a lowermost point in the low-load work characteristic for the right main pump different when a full-lever operation is performed on the right traveling operation device while the excavator travels to left on a curve, versus when the full-lever operation is performed on the right traveling operation device while the excavator travels straight.

8. (Added) The excavator according to claim 7,
wherein the control pressure corresponding to the lowermost point in the low-load work characteristic for the right main pump when the full-lever operation is performed on the right traveling operation device while the excavator travels to the left on the curve is greater than the control pressure corresponding to the lowermost point in the low-load work characteristic for the right main pump when the full-lever operation is performed on the right traveling operation device while the excavator travels straight.

9. (Added) The excavator according to claim 7,
wherein the command value corresponding to the lowermost point in the low-load work characteristic for the right main pump when the full-lever operation is performed on the right traveling operation device while the excavator travels to the left on the curve is greater than the command value corresponding to the lowermost point in the low-load work characteristic for the right main pump when the full-lever operation is performed on the right traveling operation device while the excavator travels straight.

10. (Added) The excavator according to claim 7,
wherein the control device makes a position of an uppermost point in the low-load work characteristic for the right main pump same when the full-lever operation is performed on the right traveling operation device while the excavator travels to the left on the curve and when the full-lever operation is performed on the right traveling operation device while the excavator travels straight.

11. (Added) The excavator according to claim 1,
wherein the low-load work characteristic is determined by a slope line that represents a relationship between a control pressure, which is a pressure of hydraulic oil upstream of an aperture formed on a center bypass oil line, and a command value for an amount of discharge from the hydraulic pump,
wherein the control pressure corresponding to a lowermost point in the low-load work characteristic when a full-lever operation is performed on the operation device is same as the control pressure corresponding to the lowermost point in the low-load work characteristic when a slight operation is performed on the operation device, and
wherein the command value corresponding to the lowermost point in the low-load work characteristic when the full-lever operation is performed on the operation device is the same as the command value corresponding to the lowermost point in the low-load work characteristic when the slight operation is performed on the operation device.

12. (Added) The excavator according to claim 1,
wherein the low-load work characteristic is determined by a slope line that represents a relationship between a control pressure, which is a pressure of hydraulic oil upstream of an aperture formed on a center bypass oil line, and a command value for an amount of discharge from the hydraulic pump,
wherein the control pressure corresponding to an uppermost point in the low-load work characteristic when a full-lever operation is performed on the operation device is same as the control pressure corresponding to the uppermost point in the low-load work characteristic when a slight operation is performed on the operation device, and
wherein the command value corresponding to the uppermost point in the low-load work characteristic when the full-lever operation is performed on the operation device is the same as the command value corresponding to the uppermost point in the low-load work characteristic when the slight operation is performed on the operation device.

13. (Added) The excavator according to claim 7,
wherein the control device makes the position of the lowermost point in the low-load work characteristic for the left main pump same when the full-lever operation is performed on the left traveling operation device while the excavator travels to the left on the curve and when a slight operation is performed on the left traveling operation device while the excavator travels to the left on the curve, and
wherein the control device makes a position of an uppermost point in the low-load work characteristic for the left main pump different when the full-lever operation is performed on the left traveling operation device while the excavator travels to the left on the curve versus when the slight operation is performed on the left traveling operation device while the excavator travels to the left on the curve.

14. (Added) The excavator according to claim 13,
wherein the control pressure corresponding to the uppermost point in the low-load work characteristic for the left main pump when the full-lever operation is performed on the left traveling operation device while the excavator travels to the left on the curve is same as the control pressure corresponding to the uppermost point in the low-load work characteristic for the left main pump when the slight operation is performed on the left traveling operation device while the excavator travels to the left on the curve.

15. (Added) The excavator according to claim 7,
wherein the control device makes the position of the lowermost point in the low-load work characteristic for the left main pump different when the full-lever operation is performed on the left traveling operation device while the excavator travels to the left on the curve versus when the slight operation is performed on the left traveling operation device while the excavator travels to the left on the curve, and
wherein the control device makes a position of an uppermost point in the low-load work characteristic for the left main pump different when the full-lever operation is performed on the left traveling operation device while the excavator travels to the left on the curve versus when the slight operation is performed on the left traveling operation device while the excavator travels to the left on the curve.
